# EUROPEAN PATENT APPLICATION

(11) **EP 4 769 153 A1**
(43) Date of publication of application: **01.07.2026**
(21) Application number: 24903982.7
(22) Date of filing: 05.11.2024
(51) Int. Cl.: G06F 11/22, G06F 11/30, G06F 9/30, G06F 3/14, G06F 3/048, G06N 3/045, G06N 3/096

(54) **ELECTRONIC DEVICE AND CONTROL METHOD THEREOF**

(30) Priority: 12.12.2023 KR 20230179598
(71) Applicant: Samsung Electronics Co., Ltd., Suwon-si, Gyeonggi-do 16677 (KR)
(72) Inventor: LIM, Seonjae, Suwon-si, Gyeonggi-do 16677 (KR); KWON, Taejun, Suwon-si, Gyeonggi-do 16677 (KR); SHIN, Jonghyun, Suwon-si, Gyeonggi-do 16677 (KR); AHN, Sangwon, Suwon-si, Gyeonggi-do 16677 (KR); HAHM, Seongil, Suwon-si, Gyeonggi-do 16677 (KR)
(74) Representative: HGF
(86) International application number: PCT/KR2024/017327
(87) International publication number: WO 2025/127415

(57) **Abstract**

An apparatus including: a sensor to detect information indicating a status of the electronic apparatus; a memory storing (i) a first neural network model and a second neural network model, pre-trained to classify an error type of the electronic apparatus, and (ii) one or more instructions; and a processor operatively coupled to the memory and configured to execute the one or more instructions stored in the memory that causes the electronic apparatus to acquire first error type information and second error type information by inputting the information indicating the status of the electronic apparatus into each of the first neural network model and the second neural network model, check an error category of the electronic apparatus based on the first error type information and second error type information, and control an operation of the electronic apparatus based on the error category.

## Description

### [BACKGROUND OF THE INVENTION]

### [FIELD OF THE INVENTION]

The present disclosure relates to an electronic apparatus and a method for controlling thereof, and more particularly, to an electronic apparatus which may accurately identify an error in the electronic apparatus by using a plurality of neural network models trained in different ways, and a method for controlling thereof.

### [Description of the Related Art]

An electronic apparatus may perform various functions (or operations) by using various internal components. An error may occur in the electronic apparatus due to the aging or malfunction of an internal component of the electronic apparatus. Such an error may have a small influence on the operation of the electronic apparatus, or in contrast, may be an error that prevents the electronic apparatus from performing a specific function.

As described above, the various errors may occur in the electronic apparatus, and whether the electronic apparatus is able to be operated may depend on each error state, which requires a method for accurately classifying the respective errors.

### [Disclosure]

### [Technical Solution]

According to an aspect of the disclosure an electronic apparatus includes a sensor configured to detect information indicating a status of the electronic apparatus; a memory storing (i) a first neural network model and a second neural network model, pre-trained to classify an error type of the electronic apparatus, and (ii) one or more instructions; and a processor operatively coupled to the memory and configured to execute the one or more instructions stored in the memory, wherein the one or more instructions, when executed by the processor, cause the electronic apparatus to: acquire first error type information and second error type information by inputting the information indicating the status of the electronic apparatus into each of the first neural network model and the second neural network model, check an error category of the electronic apparatus based on the first error type information and second error type information, and control an operation of the electronic apparatus based on the error category, wherein the first neural network model is pre-trained using first learning data for a plurality of error types, and the second neural network model is pre-trained using second learning data processed from the first learning data to classify error categories to which the plurality of error types respectively correspond.

According to an aspect of the disclosure, the first neural network model or the second neural network model is a model that outputs a probability value corresponding to each of the plurality of error types, and wherein the one or more instructions, when executed by the processor, cause the electronic apparatus to: check the error category of the electronic apparatus by using the probability value of each of the plurality of error types included in the second error type information based on determining that the probability value of each of the plurality of error types included in the first error type information is less than a first reference value corresponding to an error determination reference, and at least one probability value included in the first error type information is more than a second reference value which is less than the first reference value.

According to an aspect of the disclosure, the first neural network model or the second neural network model is a model that outputs a probability value corresponding to each of the plurality of error types, and wherein the one or more instructions, when executed by the processor, cause the electronic apparatus to: check an error category corresponding to an error type having a value that is a first reference value or greater as the error category of the electronic apparatus in case that at least one probability value among the probability values in the first error type information is the first reference value or greater, check no error occurrence of an error in the electronic apparatus in case that the probability values in the first error type information is less than or equal to a second reference value which is less than the first reference value, and check an error category corresponding to an error type having a value that is a third reference value or greater as the error category of the electronic apparatus in case that the at least one probability value among the probability values in the first error type information has a value between the first reference value and the second reference value, and at least one probability value among the probability values in the second error type information is the third reference value or greater.

According to an aspect of the disclosure, the one or more instructions, when executed by the processor, cause the electronic apparatus to check, based on the first error type information and the second error type information, one error category among a plurality of error categories comprising no occurrence of an error, a first error category, a second error category, and a third error category, control the operation of the electronic apparatus for the electronic apparatus to be operated in a first mode of limiting a performance of a driving device corresponding to the information indicating the status of the electronic apparatus in case that the checked error category is the first error category, control the operation of the electronic apparatus for the electronic apparatus to be operated in a second mode of further limiting the performance of the driving device than the first mode in case that the checked error category is the second error category, and control the operation of the electronic apparatus for the driving device not to be operated in case that the checked error category is the third error category.

According to an aspect of the disclosure, the electronic apparatus further includes a display, wherein the one or more instructions, when executed by the processor, cause the electronic apparatus to control the display to display information on the checked error category.

According to an aspect of the disclosure, the electronic apparatus further includes an input device receiving a control command, wherein the one or more instructions, when executed by the processor, cause the electronic apparatus to control the display to display information indicating that the control command is incapable of being performed in case that the checked error category is the first error category and the control command is a command corresponding to the performance of the driving device.

According to an aspect of the disclosure, the electronic device further includes a driving device comprising a motor and an inverter configured to provide driving power to the motor, wherein the sensor is configured to detect a plurality of current values in the driving device, and wherein the one or more instructions, when executed by the processor, cause the electronic apparatus to check the error category for at least one of the motor and the inverter based on the first error type information and the second error type information.

According to an aspect of the disclosure the first learning data is data sampled to have a number of data for each error type among collected data, and the second learning data is learning data acquired by deleting (i) data within a predetermined range of a second error type corresponding to a second error category among the first learning data of a first error type corresponding to a first error category and (ii) data within a predetermined range of the first error type among the second learning data of the second error type.

According to an aspect of the disclosure, the second learning data comprises augmented data corresponding to one of the first error type and the second error type such that the learning data corresponding to the first error category and the learning data corresponding to the second error category to have a degree of similarity within a predetermined threshold.

According to an aspect of the disclosure, the data corresponding to the first error category and the second error category in the first learning data are data based on the information indicating the status of the electronic apparatus, and the first learning data further comprises experimental data by the plurality of error types in a third error category.

According to an aspect of the disclosure, a method for controlling an electronic apparatus, the method includes detecting information indicating a status of the electronic apparatus; acquiring first error type information and second error type information by inputting the information indicating the status of the electronic apparatus into each of a first neural network model and a second neural network model, pre-trained to classify an error type of the electronic apparatus; checking an error category of the electronic apparatus based on the first error type information and second error type information; and controlling an operation of the electronic apparatus based on the error category, wherein the first neural network model is pre-trained using first learning data for a plurality of error types, and wherein the second neural network model is pre-trained using second learning data processed from the first learning data to classify the error categories to which the plurality of error types respectively correspond.

According to an aspect of the disclosure, the first neural network model or the second neural network model is a model that outputs a probability value corresponding to each of the plurality of error types, and in the checking of the error category, the error category of the electronic apparatus is checked by using the probability value of each of the plurality of error types included in the second error type information based on determining that the probability value of each of the plurality of error types included in the first error type information is less than a first reference value corresponding to an error determination reference, and at least one probability value included in the first error type information is more than a second reference value which is less than the first reference value.

According to an aspect of the disclosure, the first neural network model or the second neural network model is a model that outputs a probability value corresponding to each of the plurality of error types, and wherein the checking of the error category further comprises: checking an error category corresponding to an error type having a value that is a first reference value or greater as the error category of the electronic apparatus in case that at least one probability value among the probability values in the first error type information is the first reference value or greater, checking no error occurrence of an error in the electronic apparatus in case that probability values in the first error type information is less than or equal to a second reference value which is less than the first reference value, and checking an error category corresponding to an error type having a value that is a third reference value or greater as the error category of the electronic apparatus in case that the at least one probability value among the probability values in the first error type information has a value between the first reference value and the second reference value, and at least one probability value among the probability values in the second error type information is the third reference value or greater.

According to an aspect of the disclosure, the checking of the error category further comprises: checking, based on the acquired first error type information and second error type information, one error category among a plurality of error categories comprising no occurrence of an error, a first error category, a second error category, and a third error category , and wherein the controlling further comprises: controlling the operation of the electronic apparatus to be operated in a first mode of limiting a performance of a driving device corresponding to the information indicating the status of the electronic apparatus in case that the checked error category is the first error category, controlling the operation of the electronic apparatus to be operated in a second mode of further limiting the performance of the driving device than the first mode in case that the checked error category is the second error category, and controlling the operation of the electronic apparatus not to be operated in case that the checked error category is the third error category.

According to an aspect of the disclosure, a non-transitory computer-readable recording medium storing a program for executing a method for controlling an electronic apparatus, wherein the method comprises: receiving information indicating a status of the electronic apparatus, acquiring first error type information and second error type information by inputting the information indicating the status of the electronic apparatus into each of a first neural network model and a second neural network model, pre-trained to classify an error type of the electronic apparatus, checking an error category of the electronic apparatus based on the first error type information and second error type information, and controlling an operation of the electronic apparatus based on the error category, wherein the first neural network model is pre-trained using first learning data for a plurality of error types, and wherein the second neural network model is pre-trained using second learning data processed from the first learning data to classify the error categories to which the plurality of error types respectively correspond.

### [Description of Drawings]

The above or other aspects, features, or benefits of embodiments in the present disclosure will be more apparent by the description provided below with reference to the accompanying drawings. In the accompanying drawings:
FIG. 1 is a view for explaining an operation of an electronic apparatus according to one or more embodiments of the present disclosure;
FIG. 2 is a view for explaining a configuration of the electronic apparatus according to one or more embodiments of the present disclosure;
FIG. 3 is a view for explaining another configuration of the electronic apparatus according to one or more embodiments of the present disclosure;
FIG. 4 is a view for explaining an example of current information collected by a sensor according to one or more embodiments of the present disclosure;
FIG. 5 is a view for explaining examples of a normal state and a failure state according to examples of the collected current information;
FIG. 6 is a view showing various error types according to one or more embodiments of the present disclosure;
FIG. 7 is a view for explaining an example of a method of processing collected learning data according to one or more embodiments of the present disclosure;
FIG. 8 is a view for explaining an example of the method of processing collected learning data according to one or more embodiments of the present disclosure;
FIG. 9 is a view for explaining an example of the method of processing collected learning data according to one or more embodiments of the present disclosure;
FIG. 10 is a view for explaining learning data used for training each of two neural network models according to one or more embodiments of the present disclosure;
FIG. 11 is a view for explaining a configuration example of a neural network model according to one or more embodiments of the present disclosure;
FIG. 12 is a view for explaining a configuration example of a neural network model according to one or more embodiments of the present disclosure;
FIG. 13 is a view for explaining a configuration example of a neural network model according to one or more embodiments of the present disclosure;
FIG. 14 is a view for explaining a controlling method according to one or more embodiments of the present disclosure;
FIG. 15 is a flowchart for explaining an error diagnosis method using a plurality of neural network models according to one or more embodiments of the present disclosure;
FIG. 16 is a view for explaining a different control operation for each error category according to one or more embodiments of the present disclosure;
FIG. 17 is a view for explaining a user control command and a control operation for each error category according to one or more embodiments of the present disclosure;
FIG. 18 is a view for explaining an operation example in case that the electronic apparatus is a refrigerator according to one or more embodiments of the present disclosure;
FIG. 19 is a view for explaining an operation example in case that the electronic apparatus is an air conditioner according to one or more embodiments of the present disclosure; and,
FIG. 20 is a view for explaining an operation example in case that the electronic apparatus is a washing machine according to one or more embodiments of the present disclosure.

### [Mode for Invention]

The present disclosure may be variously modified and have several embodiments, and specific embodiments of the present disclosure are thus shown in the drawings and described in detail in the detailed description. However, it is to be understood that the scope of the present disclosure is not limited to the specific embodiments, and includes various modifications, equivalents and/or alternatives according to the embodiments of the present disclosure. Throughout the accompanying drawings, similar components are denoted by similar reference numerals.

In describing the present disclosure, omitted is a detailed description of a case where it is decided that a detailed description of the known functions or configurations related to the present disclosure may unnecessarily obscure the gist of the present disclosure.

In one or more examples, the following embodiments may be modified in several different forms, and the scope and spirit of the present disclosure are not limited to the following embodiments. Rather, these embodiments make the present disclosure thorough and complete, and are provided to completely transfer the spirit of the present disclosure to those skilled in the art.

Terms used in the present disclosure are used only to describe the specific embodiments rather than limiting the scope of the present disclosure. A term of a singular number may include its plural number unless explicitly indicated otherwise in the context.

It is to be understood that terms "include" or "have" used in the present disclosure specify the presence of features, numerals, steps, operations, components, parts mentioned in the specification, or combinations thereof, and do not preclude the presence or addition of one or more other features, numerals, steps, operations, components, parts, or combinations thereof.

In the present disclosure, in case that a component is referred to as being "connected", "coupled", "supported", or "in contact" with another component, it includes not only a case where the components are directly connected, couple, supported, or in contact with each other, but also a case where the components are indirectly connected, couple, supported, or in contact with each other through a third component.

In case that a component is referred to be disposed "on" another component, it includes not only a case where the component is in contact with another component, but also a case where still another component exists between the two components.

In the present disclosure, an expression "A or B", "at least one of A and/or B", "one or more of A and/or B", or the like, may include all possible combinations of items enumerated together. For example, "A or B", "at least one of A and B" or "at least one of A or B" may indicate all of 1) a case where at least one A is included, 2) a case where at least one B is included, or 3) a case where both of at least one A and at least one B are included.

Expressions "first", "second" and the like, used in the present disclosure, may indicate various components regardless of the sequence and/or importance of the components. These expressions are used only to distinguish one component and another component from each other, and do not limit the corresponding components.

In case that a component (for example, a first component) is mentioned to be "(operatively or communicatively) coupled with/to" or "connected to another component (for example, a second component), it is to be understood that the component may be directly coupled to another component or may be coupled to another component through still another component (for example, a third component).

On the other hand, in case that a component (for example, the first component) is mentioned to be "directly coupled to" or "directly connected to" another component (for example, the second component), it is to be understood that still another component (for example, the third component) is not present between the component and another component.

An expression "configured (or set) to" used in the present disclosure may be replaced by an expression "suitable for", "having the capacity to", "designed to", "adapted to", "made to", or "capable of" based on a situation. The expression "configured (or set) to" may not necessarily indicate "specifically designed to" in hardware.

Instead, an expression "a device configured to" in any situation may indicate that the device may "perform~" together with another device or component. For example, "a processor configured (or set) to perform A, B and C" may indicate a dedicated processor (for example, an embedded processor) that may perform the corresponding operations or a generic-purpose processor (for example, a central processing unit (CPU) or an application processor) that may perform the corresponding operations by executing one or more software programs stored in a memory device.

In the embodiments, a "module" or a "~er/or" may perform at least one function or operation, and be implemented by hardware or software or be implemented by a combination of hardware and software. In one or more examples, a plurality of "modules" or a plurality of "~ers/ors" may be integrated in at least one module and be implemented by at least one processor except for a "module" or an "~er/or" that needs to be implemented by specific hardware.

Operations performed by the modules, the programs, or other components according to the various embodiments may be executed in a sequential manner, a parallel manner, an iterative manner, or a heuristic manner, at least some of the operations may be performed in a different order or be omitted, or other operations may be added.

Various elements and regions in the drawings are schematically shown. Therefore, the spirit of the present disclosure is not limited by relative sizes or intervals shown in the accompanying drawings.

The electronic apparatus according to the various embodiments of the present disclosure may be at least one of various types of home appliances. As shown in the drawings, the electronic apparatus may include, for example, at least one of a refrigerator, a dishwasher, an electric cooker, an electric oven, an air purifier, a clothes manager, a washing machine, a dryer, an air conditioner, a cleaning robot, a vacuum cleaner, or a microwave oven, and is not limited thereto. That is, the home appliances mentioned above are only examples. In addition to the home appliances mentioned above, the electronic apparatus according to one or more embodiments of the present disclosure may also include a device that performs a specific function through an operation of a motor (or a heater, or the like) or a device that includes an inverter or the like that provides power to a specific electronic component (for example, the motor, the heater, or a steam generator). In one or more examples, the electronic apparatus may be a non-home appliance such as a computer, television, etc. The embodiments of the present disclosure may also be applied to mobile apparatuses such as a vehicle.

Hereinafter, the embodiments of the present disclosure are described in detail with reference to the accompanying drawings so that those skilled in the art to which the present disclosure pertains may easily practice the present disclosure.

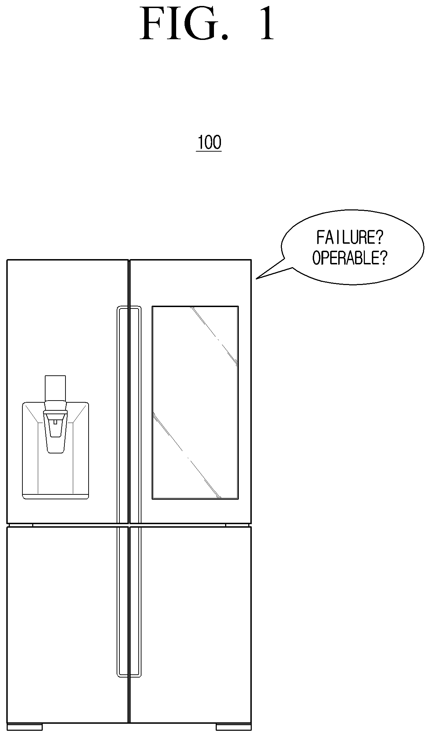

FIG. 1 is a view for explaining an operation of an electronic apparatus according to one or more embodiments of the present disclosure.

FIG. 1 shows a refrigerator as an example of an electronic apparatus 100. The refrigerator may include a main body. Hereinafter, the description first describes a configuration of the refrigerator, and then describes various errors that may occur in the refrigerator and an error classification method.

"The main body" may include an interior, an exterior disposed outside the interior, and an insulation material disposed between the interior and the exterior.

"The interior" may include at least one of a case, a plate, a panel, or a liner that forms a storage compartment. The interior may be formed as one body, or may be formed by assembling the plurality of plates. "The exterior" may form an appearance of the main body, and may be coupled to the outside of the interior for the insulation material to be disposed between the interior and the exterior.

"The insulation material" may insulate the inside of the storage compartment and the outside of the storage compartment from each other for a temperature inside the storage compartment to be maintained at a set appropriate temperature without being affected by an external environment of the storage compartment. According to one or more embodiments, the insulation material may include a foam insulation material. The foam insulation material may be formed by injecting and foaming urethane foam, in which polyurethane and a foam agent are mixed with each other, between the interior and the exterior.

According to one or more embodiments, the insulation material may include a vacuum insulation material in addition to the foam insulation material, or the insulation material may only include the vacuum insulation material instead of the foam insulation material. The vacuum insulation material may include a core material and an envelope material that accommodates the core material and seals its interior with vacuum or a near-vacuum pressure. However, the insulation material is not limited to the foam insulation material or the vacuum insulation material, described above, and may include a variety of materials that may be used for the insulation.

"The storage compartment" may include a space defined by the interior. The storage compartment may further include an interior that defines a space corresponding to the storage compartment. The storage compartment may store various items such as food, medicine, and cosmetics, and the storage compartment may have at least one side that is open for putting in and out these items.

The refrigerator may include at least one storage compartment. In case that two or more storage compartments are formed in the refrigerator, each storage compartment may have a different purpose and be maintained at a different temperature. To this end, the respective storage compartments may be partitioned from each other by a partition including the insulation material.

The storage compartment may maintain an appropriate temperature range based on the purpose, and include a "refrigerator compartment", a "freezer compartment", or a "variable temperature compartment", classified by its purpose and/or temperature range. The refrigerator compartment may be maintained at an appropriate temperature for refrigerating and storing the item, and the freezer compartment may be maintained at an appropriate temperature for freezing and storing the item. "Refrigeration" may indicate cooling the item to a point where the item is not frozen. For example, the refrigerator compartment may be maintained in a range of 0 degrees Celsius to +7 degrees Celsius. "Freezing" may indicate freezing the item or cooling the item so that the item remains frozen. For example, the freezer compartment may be maintained in a range of -20 degrees Celsius to -1 degree Celsius. The variable temperature compartment may be used as either the refrigerator compartment or the freezer compartment, with or without a user choice.

The storage compartment may be referred to by various names such as a "vegetable compartment", a "fresh compartment", a "cooling compartment", and an "ice compartment" in addition to the names such as "the refrigerator compartment", "the freezer compartment" and "the variable temperature compartment". The terms such as "the refrigerator compartment", "the freezer compartment", and "the variable temperature compartment" used hereinafter should be understood as indicating a concept encompassing the storage compartments each having the corresponding purpose and temperature range.

According to one or more embodiments, the refrigerator may include at least one door that opens and closes the open side of the storage compartment. The door may be provided to open and close each of one or more storage compartments, or one door may be provided to open and close the plurality of storage compartments. The door may be rotatably or slidably installed on the front of the main body.

The "door" may seal the storage compartment in case that the door is closed. The door may include the insulation material like the main body to insulate the storage compartment in case that the door is closed.

According to one or more embodiments, the door may include a door exterior plate which forms the front of the door, a door interior plate which forms the rear of the door and faces the storage compartment, an upper cap, a lower cap, and a door insulation material disposed therein.

A gasket that seals the storage compartment by adhering to the front of the main body in case that the door is closed may be provided on a border of the door interior plate. The door interior plate may include a dyke that protrudes rearward to be mounted with a door basket for storing the item.

According to one or more embodiments, the door may include a door body, and a front panel that is detachably coupled to the front of the door body and forms the front of the door. The door body may include the door exterior plate which forms the front of the door body, the door interior plate which forms the rear of the door body and faces the storage compartment, the upper cap, the lower cap, and the door insulation material disposed therein.

The refrigerator may be classified into a French door type, a side-by-side type, a bottom mounted freezer (BMF), a top mounted freezer (TMF), a one-door refrigerator, or the like based on the arrangement of the door and the storage compartment.

According to one or more embodiments, the refrigerator may include a cold air supply device supplying cold air to the storage compartment.

"The cold air supply device" may include a machine, device, the electronic apparatus, and/or a combination system capable of generating the cold air and guiding the cold air to cool the storage compartment.

According to one or more embodiments, the cold air supply device may generate the cold air through a refrigeration cycle that includes the compression, condensation, expansion, and evaporation processes of a refrigerant. To this end, the cold air supply device may include a refrigeration cycle device having a compression device, a condensation device, an expansion device, and an evaporation device, which may drive the refrigeration cycle. According to one or more embodiments, the cold air supply device may include a motor that operates the compression device and an inverter that supplies power to the motor. Alternatively, the cold air supply device may include a semiconductor such as a thermoelectric element and an inverter that supplies power to thermoelectric element instead of the above-described compression device. Thermoelectric element may cool the storage compartment through heating and cooling using Peltier effect.

According to one or more embodiments, the refrigerator may include a machine room where at least some parts included in the cold air supply device are disposed.

"The machine room" may be partitioned and insulated from the storage compartment to prevent heat occurring in the parts disposed in the machine room from being transferred to the storage compartment. The inside of the machine room may communicate with the outside of the main body to dissipate heat from the parts disposed in the machine room.

According to one or more embodiments, the refrigerator may include a dispenser disposed on the door to dispense water and/or ice. The dispenser may be disposed in the door for a user to access the dispenser without opening the door.

According to one or more embodiments, the refrigerator may include an ice maker that generates ice. The ice maker may include an ice-making tray that stores water, an ice-moving device that separates ice from the ice-making tray, and an ice bucket that stores ice generated in the ice-making tray.

According to one or more embodiments, the refrigerator may include a controller controlling the refrigerator.

"The controller" may include a memory that stores or memorizes a program and/or data for controlling the refrigerator, and a processor that outputs a control signal to control the cold air supply device, or the like based on the program and/or the data, stored in the memory.

The memory may store or record various information, data, commands, programs, or the like, necessary for operating the refrigerator. The memory may memorize temporary data generated while generating the control signal to control the components included in the refrigerator. The memory may include at least one of a volatile memory or a non-volatile memory, or a combination thereof.

The processor may control overall operations of the refrigerator. The processor may control the components of the refrigerator by executing the program (e.g., instructions) stored in the memory. The processor may include a separate neural processing unit (NPU) that performs an operation of an artificial intelligence model. In one or more examples, the processor may include a central processing unit, a graphics processor (GPU), or the like. The processor may generate the control signal to control the operation of the cold air supply device. For example, the processor may receive temperature information of the storage compartment from a temperature sensor, and generate a cooling control signal to control the operation of the cold air supply device based on the temperature information of the storage compartment.

In one or more examples, the processor may process a user input through a user interface and control an operation of the user interface based on the program and/or data memorized/stored in the memory. The user interface may be provided using an input interface and an output interface. The processor may receive the user input through the user interface. In one or more examples, the processor may transfer, to the user interface, a display control signal and image data to display an image on the user interface in response to the user input.

In one or more examples, the processor may diagnose whether an error (or failure) occurs in each component disposed in the electronic apparatus. In detail, the processor may use current information measured in a specific component to thus check whether the error occurs in the corresponding component. In one or more example, the current information may be information indicating a status of the electronic apparatus. For example, the current information may indicate a fault code associated with a component of the electronic apparatus (e.g., compressor). In one or more examples, the current information may provide a range of operating values of a component of the electronic apparatus, where the processor references a table of operating values to determine whether the component is operating properly. In one or more examples, in case of identifying the error, the processor may limit or stop an operation of the corresponding component. A specific diagnostic method is described below.

In one or more examples, the error may be caused by a hardware abnormality (disconnection, short circuit, failure of a specific part) of the specific component, a software abnormality of the specific component, or the like, and such an error may be referred to as a failure or a malfunction.

The processor and the memory may be disposed integrally or separately. The processor may include at least one processor. For example, the processor may include a main processor and at least one sub processor. The memory may include at least one memory.

According to one or more embodiments, the refrigerator may include the processor and the memory that control all the components included in the refrigerator, and include a plurality of processors and a plurality of memories that individually control the components of the refrigerator. For example, the refrigerator may include the processor and the memory that control the operation of the cold air supply device based on output of the temperature sensor. In one or more examples, the refrigerator may be separately equipped with the processor and the memory that control the operation of the user interface based on the user input.

A communication module may communicate with an external device such as a server, a mobile device, or another home appliance through a nearby access point (AP). The AP may connect a local area network (LAN), to which the refrigerator or a user device is connected, to a wide area network (WAN) to which the server is connected. The refrigerator or the user device may be connected to the server through the WAN.

The communication module may output component error information to another electronic apparatus (e.g., a user terminal device or a home server) in case of checking that the error (or failure) occurs in the specific component disposed in the electronic apparatus.

The input interface may include a key, a touch screen, a microphone, or any other input device known to one of ordinary skill in the art. The input interface may receive the user input and transfer the same to the processor.

The output interface may include a display, a speaker, or any other output device known to one of ordinary skill in the art. The output interface may output various notifications, messages, information, or the like, generated by the processor. For example, the output interface may output information on the error (or failure) in case of checking that the error occurs in the specific component disposed in the electronic apparatus.

Hereinabove, the description describes the components in the refrigerator by assuming that the electronic apparatus 100 is the refrigerator. However, as described above, the electronic apparatus of the present application may be a device other than the refrigerator. Accordingly, in case that the electronic apparatus 100 is implemented as the device other than the refrigerator, the electronic apparatus 100 may be implemented to have configurations of another device instead of the configurations of the refrigerator described above.

Hereinafter, the description describes a diagnosis method using the present disclosure.

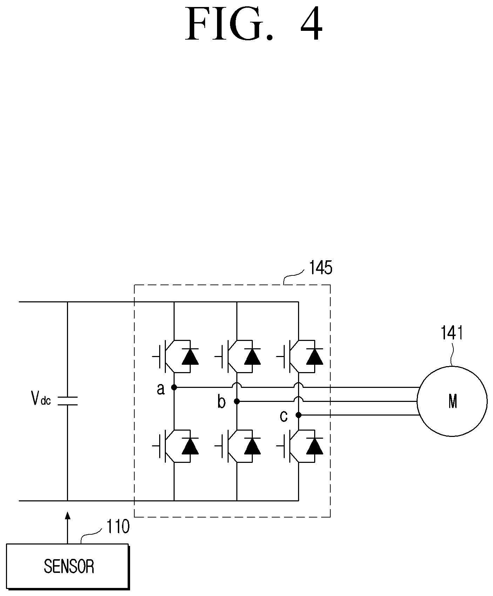

As described above, the refrigerator may operate a compressor by rotating the motor, and the motor may be operated by driving power supplied from the inverter. Therefore, the refrigerator may measure an output current (or a current in a specific loop) of each component in the inverter and analyze the same to check whether the failure occurs in the inverter (or the motor). In case that the refrigerator operates the compressor by using a three-phase motor, driving power of the three-phase motor may be generated through an operation of six switch elements. Its specific configuration and operation are described below with reference to FIG. 4.

Hereinafter, the description is provided assuming a case of using the three-phase motor and the six switch elements. However, a method described below may be modified and applied to a case of using a motor other than the three-phase motor, or even a case of using a different number of switch elements.

The error occurring in the inverter (or the motor) may be largely classified into one of the following four example categories. As understood by one of ordinary skill in the art, the number of categories is not limited number to four, and may include any desired number of error categories. The number of categories may be based on a type of the electronic apparatus.

In one or more examples, a first error category may be caused by a sensor abnormality, and include, for example, two types of errors. For example, a first error may be an error (scale failure) in which a current value is measured to be higher than an experimentally or computationally input current value (e.g., the current value is 1.2 times greater than an applied current). The second error may be an error occurring in case that a peak value measured by a current sensor is higher than a predetermined value (e.g., +0.25 A) compared to its normal state, or an error (e.g., offset failure) occurring in case that an offset of the measured current peak value is changed. The errors caused by the sensor abnormality may be referred to as the first error category.

In one or more examples, a second error category may be caused by an abnormality in which the switch element in the inverter is not turned on, and include, for example, six types of errors (e.g., each error corresponds to the switch element where failure occurs) in that six switch elements are provided as described above. Hereinafter, these error types may be referred to as the second error category. However, the plurality of switch elements may be disposed in the inverter, and the inverter may thus be operated even in case that the failure occurs in only one switch element. However, an overcurrent may occur in the inverter. On the other hand, a case where the failure occurs in the plurality of switch elements may be classified as a separate error category. As understood by one of ordinary skill in the art, an overcurrent may refer to an electrical condition that occurs when the normal load current of a circuit is exceeded. The overcurrent may occur when there is more current than the equipment's rated current or the conductor's ampacity. An overcurrent may be caused by an overload, short circuit, ground fault, etc.

In one or more examples, a third error category may be an abnormality occurring in current transfer between the inverter and the motor, which is an error that may occur due to a disconnection between the motor and the inverter or a disconnection occurring in the motor. This error may include, for example, three types of errors (e.g., each error corresponds to each line of three phases of the motor), and hereinafter, these error types may be referred to as the third error category.

In one or more examples, a fourth error category may be caused by an abnormality in which the switch element in the inverter is not turned off, and include six types of errors in that six switch elements are provided as described above. Hereinafter, these error types are referred to as the fourth error category. Unlike the second error category described above, the fourth error category may be an error type that requires immediate failure control in that an immediate overcurrent may occur even in case that the failure occurs in only one switching element.

In one or more examples, the error types may be classified based on the abnormality or error occurring in a specific component, and the error category may indicate error type sets that have the same error type or require the same response based on the error type although their causes (e.g., the components) are different from each other. The error type may be referred to as the error number, a failure number, or any other suitable error designation, and the above-mentioned number and type may be used in various modified forms.

As described above, the error category may be classified based on the component (or method) in which the error occurs. Alternatively, as described above, the error categories may be grouped based on the method for responding the error occurrence.

According to one or more embodiments, the above-mentioned error types are classified into four error categories. However, in implementation, the error categories may be classified based on an error risk level. For example, it is possible to classify a first risk type as a case where a risk level is small, a second risk type as a case where the risk level is medium, and a third risk type as a case where the risk level is high and an immediate operation interruption is required. In this case, it is possible to classify first and second error types as the first risk type, the third to eleventh error types as the second risk type, and the twelfth to seventeen error types as the third risk type. In one or more examples, the risk type may also be referred to as an error state, a risk category, a failure category, a failure type, or any other suitable failure designation.

Among the above errors, the first and second error types corresponding to the first error category may be caused by the sensor abnormality, which may be an abnormality that causes no significant trouble even when a normal operation is performed because no problem occurs in the inverter or the motor, which serves a direct function in a driving operation of the electronic apparatus.

However, the remaining error categories, except for the first error category, may be abnormalities where the problems occur in the inverter or the motor, which has the direct function in the driving operation, thereby causing problems in case that the normal operation is performed.

In particular, the fourth error category may be a more dangerous (e.g., significant) error than the second error category or the third error category in that the fourth error category is an error that may cause overheating of the motor because the switch element is always turned on.

As described above, different error categories have different risk levels, although, in one or more examples, each error type does not require accurate classification within the same error category. Therefore, accurately classifying which error category the occurring error belongs to advantageously provides an accurate operating status of the electronic apparatus..

However, the actually occurring errors described above often belong to the first error category. Accordingly, learning data collected for a failure diagnosis may include a very high proportion of learning data belonging to the first error category.

If a neural network model is trained in the above-described state, failure-related data may not be evenly collected. Therefore, the errors belonging to the second error category (or the third error category) may also be likely to be classified as the first error category. To the contrary, the errors belonging to the first error category may also be classified into the second error category (or the third error category).

However, as described above, the errors corresponding to the first error category and the errors corresponding to the second error category (or the third error category) have different failure levels, resulting in differences in subsequent control operations. Therefore, there is a need for a method of accurately classifying the first error category and the second error category (or the third error category) from each other.

If the classification of the error category is unable to be reliably performed as described above, the electronic apparatus is required to be always operated assuming the worst case scenario. That is, even though the sensor abnormality occurs and there is no problem with the normal operation of the apparatus, its operation itself may become impossible, thus causing inconvenience to the user who uses the electronic apparatus.

To solve this problem, in the present disclosure, it is possible to accurately classify the error types (or error categories) described above using the plurality of neural network models trained with different learning data.

For example, a first neural network model used in the present disclosure may be a model trained using the learning data for the plurality of error types, and a second neural network model may be a model trained using second learning data processed from first learning data used for training the first neural network model to classify the error categories to which the plurality of error types respectively correspond. In detail, the second neural network model may be a model that may more accurately classify the first error category and the second error category (or the third error category) from each other than the first neural network model.

In one or more examples, the "learning data" may be data used for training the neural network model described above, and use actual measurement data, simulation data, or the like. Hereinafter, the learning data may be processed in various ways. Hereinafter, for a classification purpose, the expression "learning data" is used as having the above-mentioned meaning. Data acquired by collecting various cases is referred to as "raw data", data prepared to be used for training the first neural network model using the raw data is referred to as "the first learning data", and data processed from the first learning data to be used for training the second neural network model is referred to as "the second learning data".

The description above describes that the error type of the error is checked using the neural network model, and the control operation is performed based on the error category belonging to the checked error type. The reason is that, as described above, the type of current information measured in case that the error occurs in which the first switch element is not turned off is different from the type of current information measured in case that the error occurs in which the second switch element is not turned off. Therefore, according to one or more embodiemtns, the method is used to first check the error type and then check the error category to which the checked error type belongs.

However, in one or more examples, a method may also be used to train the neural network model by combining the learning data by error category instead of training the neural network model to classify the error types. That is, it is also possible to train the neural network model to output a probability value in a specific error category instead of outputting a probability value of each error type, and use this neural network.

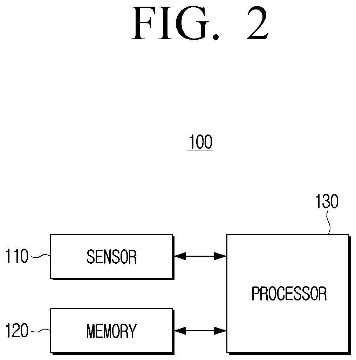

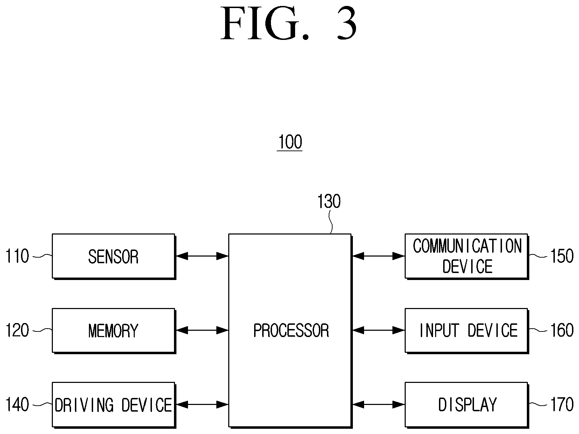

The electronic apparatus may identify the error type (or error category) by using these two neural network models. Therefore, it is possible for the electronic apparatus to accurately identify the error occurring therein. The specific configuration and operation of the electronic apparatus 100 are described below with reference to FIGS. 2 and 3.

Meanwhile, the description above describes only the failure diagnosis of the motor or the inverter. However, the errors may also occur in various devices or components in addition to the inverter (or the motor that drives the compressor) described above. Therefore, the electronic apparatus 100 may be equipped with the neural network model as described above corresponding to each configuration to thus also perform the error diagnosis of its various configurations.

FIG. 2 is a view for explaining a configuration of the electronic apparatus according to one or more embodiments of the present disclosure.

Referring to FIG. 2, the electronic apparatus 100 may include a plurality of sensors 110, an input device 160, a memory 120, and a processor 130.

In one or more examples, the sensor 110 may detect the plurality of current information in the electronic apparatus 100. The plurality of current information may include information indicating a status of the electronic apparatus 100. For example, the sensor 110 may detect a current value output at a plurality of nodes (or loops) in the inverter disposed in the electronic apparatus 100. In one or more examples, the current information may be information indicating whether the current is conducted, or may be the current value at the corresponding node (or loop). The current value described above in implementation may be the current value itself, may be a converted value (scaled value), or may use a voltage value of a specific resistor used to measure the current value.

In one or more examples, the sensing operation of the sensor 110 may be performed based on a control command of the processor 130, which is described below, and may be automatically measured in predetermined cycle units and provided to the processor 130. In one or more examples, each sensor information (or sensing value) may use information measured at a corresponding moment, or the average value of the corresponding cycle units. In one or more examples, the above-mentioned predetermined cycle unit may be 20 ms, and is not limited thereto.

The description above describes that the processor uses only the current information. However, in one or more examples, the processor may use other voltage information in addition to the current information. In one or more examples, this application describes that one sensor detects the plurality of the current information. However, in implementation, this application may use the plurality of sensors.

The memory 120 may store at least one instruction related to the electronic apparatus 100. In one or more examples, the memory 120 may store an operating system (O/S) for driving the electronic apparatus 100. The instruction may store an instruction for identifying the error type described below, an instruction for controlling the operation of the electronic apparatus based on the identified error type, an instruction for controlling various components of the electronic apparatus, an instruction for controlling a component of the electronic apparatus that is in an error state, and an instruction for storing the information collected by the sensor as the learning data, or any other suitable information.

The memory 120 may include a semiconductor memory such as a flash memory, or a magnetic storing medium such as a hard disk. For example, the memory 120 may store various software modules for operating the electronic apparatus 100 according to the various embodiments of the present disclosure, and the processor 130 may execute the various software modules stored in the memory 120 to control the operation of the electronic apparatus 100. That is, the memory 120 may be accessed by the processor 130, and the processor 130 may perform readout, recording, correction, deletion, update and the like of data therein.

According to one or more embodiments, the term "memory 120" may include the memory 120, a read only memory (ROM) or a random access memory (RAM), disposed in the processor 130, or a memory card (for example, a micro secure digital (SD) card or a memory stick) mounted on the electronic apparatus 100.

The memory 120 may store the pre-trained first neural network model and second neural network model. For example, the neural network model may be implemented as a convolutional neural network (CNN), a long short-term memory (LSTM), a deep neural network (DNN), a recurrent neural network (RNN), a restricted Boltzmann machine (RBM), a deep belief network (DBN), or a bidirectional recurrent deep neural network (BRDNN). As understood by one of ordinary skill in the art, the embodiments are not limited to these examples and may include any suitable neural network or machine learning model known to one of ordinary skill in the art.

The neural network model may be a computing system implemented based on a neural network of a human or animal brain, and also be referred to as a learning model, a machine learning model, the artificial intelligence model, a deep learning model, or any other suitable machine learning model.

According to one or more embodiments, two neural network models may be used in the present disclosure. The two neural network models may differ only in the learning data used for their learning, and their internal model may be the same, or the two neural network models may have different learning data and models themselves. For example, both the first and second neural network models may use a CNN method. Alternatively, the first neural network model may use the CNN method, and the second neural network model may use a DNN method. This combination of methods is only an example, and various combinations of methods may be used.

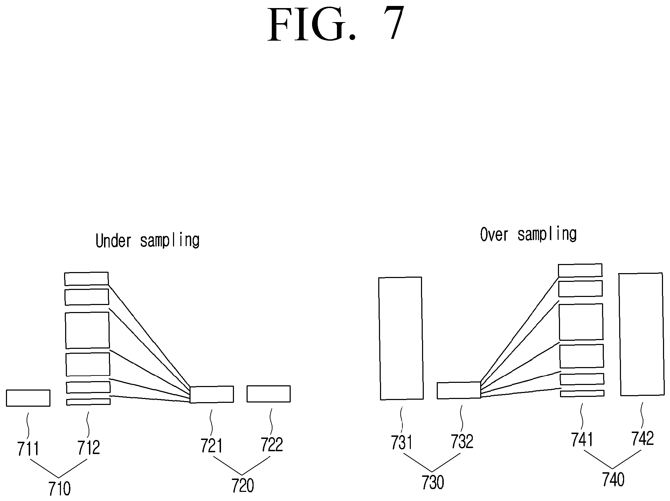

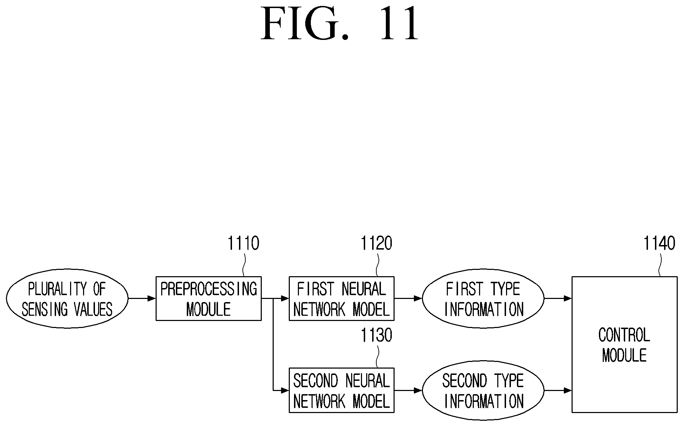

The description describes the learning data used in the two neural network models below with reference to FIGS. 7 to 10, and describes an implementation example of the neural network model in detail with reference to FIGS. 11 to 15.

In one or more examples, the memory 120 may store the information collected by the sensor. In detail, the information collected in this way may be used for training the neural network model described above. Therefore, in case that the error is detected, the current information used to detect the error may be stored in the memory 120.

The processor 130 may control overall operations of the electronic apparatus 100. For example, the processor 130 may control the overall operations of the electronic apparatus 100 by executing at least one instruction stored in the memory 120 as described above.

The processor 130 may be at least one processor. In one or more examples, at least one processor 130 may include at least one of a CPU, a GPU, or an NPU, and is not limited to the examples of the processor 130 described above.

The CPU is a general-purpose processor which may perform not only general calculations but also artificial intelligence calculations, and may efficiently execute complex programs through a multi-layered cache structure. The CPU may be advantageous for a serial processing method that enables organic linkage between a previous calculation result and a next calculation result through sequential calculations. The general-purpose processor is not limited to the above examples unless specified as the above-mentioned CPU.

The GPU is the processor for large-scale calculations such as floating-point calculations used for graphics processing, and may perform the large-scale calculations in parallel by integrating a large number of cores. In particular, the GPU may be advantageous for a parallel processing method such as a convolution calculation or the like compared to the CPU. In one or more examples, the GPU may be used as the co-processor 130 to supplement a function of the CPU. The processor for the large-scale calculations is not limited to the above example unless specified as the above-mentioned GPU.

The NPU is the processor specialized in the artificial intelligence calculation using an artificial neural network, and each layer included in the artificial neural network may be implemented in hardware (e.g., silicon). In one or more examples, the NPU is specially designed based on requirements of a company, and may thus have a lower degree of freedom than the CPU or the GPU. However, the NPU may efficiently process the artificial intelligence calculation required by the company. Meanwhile, as the processor specialized for the artificial intelligence calculation, the NPU may be implemented in various forms such as a tensor processing unit (TPU), an intelligence processing unit (IPU), and a vision processing unit (VPU). The artificial intelligence processor is not limited to the above example unless specified as the above-mentioned NPU.

In one or more examples, at least one processor 130 may be implemented in a system on chip (SoC). In one or more examples, the SoC may further include the memory 120 and a network interface such as a bus for data communication between the processor 130 and the memory 120 in addition to at least one processor 130.

In case that the plurality of processors 130 are included in the SoC included in the electronic apparatus 100, the electronic apparatus 100 may uses some processors 130 of the plurality of processors 130 to perform the artificial intelligence calculation (for example, calculations related to the learning or inference of the artificial intelligence model). For example, the electronic apparatus 100 may perform the artificial intelligence calculation by using at least one of the GPU, NPU, VPU, TPU, or a hardware accelerator that is specialized for the artificial intelligence calculation such as convolution calculation or matrix multiplication calculation among the plurality of processors 130. However, this configuration is only an example, and the electronic apparatus may process the artificial intelligence calculation by using the general-purpose processor such as the CPU.

In one or more examples, the electronic apparatus 100 may perform calculation for a function related to the artificial intelligence by using multi-cores (e.g., dual-core or quad-core) included in one processor 130. In particular, the electronic apparatus 100 may perform the artificial intelligence calculation such as the convolution calculation or the matrix multiplication calculation in parallel by using the multi-core included in the processor 130.

At least one processor 130 may perform control for input data to be processed based on a predefined operation rule stored in the memory 120 or the artificial intelligence model. The predefined operation rule or the artificial intelligence model may be provided by the learning.

In one or more examples, being provided through the learning indicates that the predefined operation rule or artificial intelligence model of a desired feature is provided by applying a learning algorithm to a large number of learning data. Such learning may be performed by a device itself in which the artificial intelligence is performed according to the present disclosure, or by a separate server/system. For example, the learning model may be pre-trained by server at a remote location that uses data from a plurality of electronic apparatus. After the pre-training, the learning model may be downloaded to the electronic apparatus 100 (FIG. 1), where the learning model may be further refined based on data specific to the electronic apparatus 100.

The artificial intelligence model may include the plurality of neural network layers. At least one layer has at least one weight value and performs a layer calculation through a calculation result of a previous layer and at least one defined calculation. Examples of the neural network may include the CNN, the DNN, the RNN, the RBM, the DBN, the BRDNN, a deep Q-network, and a transformer. However, the neural network of the present disclosure is not limited to the above examples unless specified otherwise.

In one or more examples, the learning algorithm may be a method of training a predetermined target device (e.g., robot) by using the large number of learning data for the predetermined target device to make a decision or a prediction for itself. The learning algorithm may include, for example, a supervised learning algorithm, an unsupervised learning algorithm, a semi-supervised learning algorithm, or a reinforcement learning algorithm. However, the learning algorithm of the present disclosure is not limited to the above-described examples, and may include any suitable learning algorithm known to one of ordinary skill in the art.

According to one or more embodiments, the processor 130 may check the error type by using the current information. In detail, the processor 130 may perform processes related to the various embodiments according to the present disclosure by using the plurality of modules. These processes are described below with reference to FIGS. 11 to 13.

The plurality of modules may be implemented as hardware modules or software modules, and at least some modules may include the neural network model. Hereinafter, for convenience of explanation, the description assumes that the plurality of modules are all implemented through the memory 120 and processor 130 of the electronic apparatus 100. However, in some embodiments, at least some modules of the plurality of modules may be implemented by the external device or the server.

The processor 130 may acquire the error type by using the two neural network models, and check the error state based on the acquired error type. For example, the processor 130 may acquire the first error type by inputting the current information into the first neural network model, acquire the second error type by inputting the current information into the second neural network model, and check the error type of the electronic apparatus based on the acquired first error type and second error type.

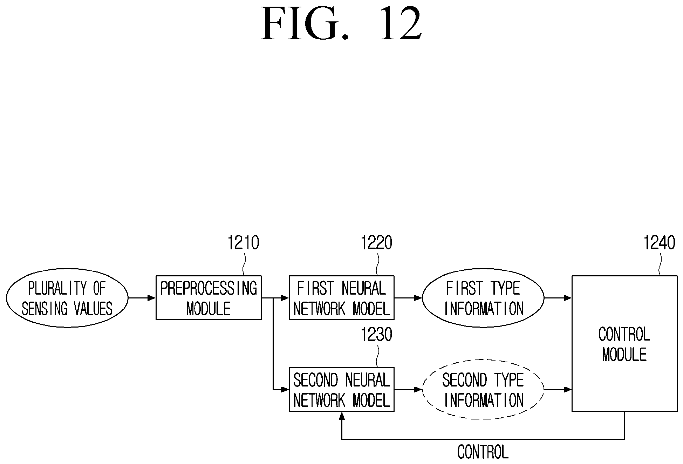

In one or more examples, the processor 130 may sequentially or simultaneously use the two neural network models. For example, the processor 130 may acquire the first error type by inputting the current information into the first neural network model, check whether there is a need to use the second neural network model based on the acquired first error type, acquire the second error type by inputting the current information into the second neural network model in case there is a need to use the second neural network model, and check a final error type based on the acquired second error type. These examples are described in detail with reference to FIG. 12, and an example of the simultaneous use is described below with reference to FIG. 11.

In one or more examples, the processor 130 may control the operation of the electronic apparatus based on the checked error category (or error state). For example, in case that the error state is not checked, the processor 130 may be operated in a general mode. The general mode may be referred to as a normal mode, a standard mode, a normal state, a normal condition, or the like.

In one or more examples, in case that the error state corresponding to the first error category is checked, the processor 130 may be set to and operated in a first mode of limiting performance of a driving device corresponding to the current information. The first mode may be referred to as a first safe mode, a first abnormal mode, a first error mode, a first safe operation mode, or the like. The first mode may be a mode of using a component related to the above-mentioned error while operating the component within a range that does not put a large load on its operation. In one or more examples, the processor 130 may notify the user of the occurrence of the above-mentioned error.

In one or more examples, in case that the error state corresponding to the second error category is checked, the processor 130 may be set to and operated in a second mode of further limiting the performance of the driving device corresponding to the current information. The second mode may be referred to as a second safe mode, a second abnormal mode, a second error mode, a second safe operation mode, or the like.

In case of being operated in the second mode, the processor 130 may notify the user of the corresponding error state and be operated in the second mode of limiting the performance of the driving device based the user choice, or operated without using the driving device.

In one or more examples, in case that the error state corresponding to the third error category is checked, the processor 130 may be set to and operated in a stop mode of preventing the operation of the driving device corresponding to the current information. In one or more examples, the processor 130 may notify the user of the occurrence of the corresponding error.

The description above describes that the processor 130 immediately performs the control operation corresponding to the checked error category. However, in one or more examples, the processor 130 may determine the error state in an intermediate stage, and subsequently perform the control operation based on the error state. For example, the processor 130 may check that the error state is in a first stage in case that the first error category is checked. In case that the second error category or the third error category is checked, the processor 130 may check that the error state is in a second stage, which is more serious than the first stage, and in case that the fourth error category is checked, the processor 130 may check that the error state is very serious.

As described above, the electronic apparatus according to one or more embodiments may use the neural network model for general error classification and the neural network model having improved classification performance of the error categories, and thus classify the error type more accurately. Accordingly, the electronic apparatus may easily perform an adaptive operation based on the classified error type.

The description above describes only one type of configuration of the electronic apparatus 100, and in one or more exampels, the electronic apparatus 100 may further include various configurations. These configurations are described below with reference to FIG. 3.

FIG. 3 is a view for explaining another configuration of the electronic apparatus according to one or more embodiments of the present disclosure.

Referring to FIG. 3, the electronic apparatus 100 may include the sensor 110, the memory 120, the processor 130, a driving device 140, a communication device 150, the input device 160, and a display 170.

The description describes the sensor 110, the memory 120, and the processor 130 above with reference to FIG. 2, and hereinafter focuses on a difference from the operation described above.

The driving device 140 may perform a specific function (or service) of the electronic apparatus, and include the motor and the inverter in case that the electronic apparatus 100 is a device that is rotated to perform the specific function.

For example, in case that the electronic apparatus is the refrigerator or the air conditioner, the driving device 140 may include a motor rotating the compressor or the like, and an inverter providing the driving power to the motor. In one or more examples, in case that the electronic apparatus is the washing machine, the driving device 140 may include a motor rotating the drum and an inverter supplying the driving power to the motor. In one or more examples, in case that the electronic apparatus is the microwave oven, the driving device 140 may include a generator generating electromagnetic waves and the inverter supplying the power to the generator. The electronic apparatus may have a magnetic force generating coil and the inverter supplying the power to the coil. Hereinafter, for ease of explanation, assume the case of including the motor and the inverter.

The motor may be a component enabling the rotation, and may be a direct current (DC) motor, a brushless DC (BLDC) motor, or the three-phase motor.

The inverter may provide the driving power to the three-phase motor. Hereinafter, the description assumes that the inverter provides the driving power to the three-phase motor and thus describes an example that the inverter uses the six switch elements. However, in case that the motor uses a configuration other than the three-phase motor as described above, the inverter may have a circuit configuration corresponding to the corresponding configuration. The specific configuration and operation of the inverter are described with reference to FIG. 4.

The sensor 110 may measure the plurality of current values in each loop of the inverter described above.

The communication device 150 may connect the electronic apparatus 100 to the external device (in detail, a terminal device, the home server, an external server, or the like), and may be connected by not only short-range wireless communication (for example, Bluetooth, wireless fidelity (WiFi), WiFi direct), but also long-distance wireless communication (for example, wireless communication such as global system for mobile communication (GSM), a universal mobile telecommunications system (UMTS), a long-term evolution (LTE), or wireless broadband (WiBRO).

The communication device 150 may include at least one of a wireless fidelity (WiFi) module, a Bluetooth module, a wireless communication module, a near field communication (NFC) module, or an ultra wide band (UWB) module. In detail, the WiFi module and the Bluetooth module may respectively perform the communication by using a WiFi method and a Bluetooth method. In case of using the WiFi module or the Bluetooth module, the communication device 150 may first transmit and receive various connection information such as a service set identifier (SSID), connect the communication by using this connection information, and then transmit and receive various information.

In one or more examples, the wireless communication module may perform the communication based on various communication protocols such as institute of electrical and electronics engineers (IEEE), zigbee, 3rd generation (3G), 3rd generation partnership project (3GPP), long term evolution (LTE), and 5th Generation (5G). In one or more examples, the NFC module may perform the communication by using an NFC method that uses a 13.56 MHz band among various radio frequency identification (RF-ID) frequency bands such as 135 kHz, 13.56 MHz, 433 MHz, 860 to 960 MHz, and 2.45 GHz.

The communication device 150 may receive the trained neural network model from the external device, receive the learning data necessary for training the neural network model, or transmit the learning data collected by the electronic apparatus 100 to the external device.

Alternatively, in case of using the neural network model stored in the external server, the communication device 150 may transmit the current information collected by the sensor and/or transmit a user manipulation command to the external server. In response thereto, the communication device 150 may receive the identified error information from the external server.

In case that the error is checked in the electronic apparatus, the communication device 150 may transmit the information on the checked error to the external device (e.g., the user terminal device, the home server, or a manufacturer server).

In one or more examples, the communication device 150 may also receive various control commands for the electronic apparatus through the external device (e.g., the user terminal device).

The input device 160 may receive a user command. The user command may be a control command for controlling the functions of the electronic apparatus. For example, in case that the electronic apparatus is the refrigerator, the control command may be related to a set temperature of the refrigerator compartment or a set temperature of the freezer compartment. The control command may be input through the communication device 150 as described above.

In one or more examples, in case that the error occurs, the input device 160 may receive input of an operation state of the electronic apparatus in relation to this error. For example, in the case of the first error category, which leads to the state of the limited operation, the input device 160 may receive a setting from the user as to whether to perform the normal operation, whether to perform the operation or not, or whether to perform the limited operation in the state of the first error category. In one or more examples, the input device 160 may receive a setting as to whether to perform the limited operation or whether to perform an operation of the component in which an error occurs also in the second error category.

In one or more examples, the limitation in the driving performance may be related to the driving device that causes the error. For example, the refrigerator compartment and freezer compartment of the electronic apparatus 100 may be operated by separate compressors, and the error may occur only in the motor (or the inverter) related to the refrigerator compartment. In this case, the electronic apparatus 100 may perform the above-described limited operation of only the refrigerator compartment in which the error occurs, and perform an operation of the freezer compartment, in which no error occurs, in the normal mode.

The display 170 may display various information supported by the electronic apparatus 100. The display 170 may be a display such as a liquid crystal display (LCD), and may also be implemented as a touch screen which may perform the function of the above-described input device together.

The display 170 may display the operation state of the electronic apparatus 100. In one or more examples, the display 170 may display the identified error information and information (for example, after-sales service (AS) contact information) on a method to resolve the error.

The display 170 may display various functions that may be performed by the electronic apparatus. In one or more examples, in case that the processor 130 is operated in the first mode or the second mode, the display 170 may display only a function capable of being performed, excluding functions incapable of being performed in the first mode or the second mode. In one or more examples, in case of receiving the control command for the function incapable of being performed in the first mode or the second mode from the user, the processor 130 may control the display 170 to display a message indicating that the corresponding function is incapable of being performed.

FIG. 3 shows various configurations that may be included in the electronic apparatus 100 in providing the description with reference thereto. However, in implementation, the electronic apparatus 100 may omit some of the above-described components, or further include another component. For example, the electronic apparatus 100 may further include a microphone, a speaker, or any other suitable component, and thus, receive the control command by voice from the user, or output various information on the vacuum cleaner as a sound.

FIG. 4 is a view for explaining an example of the current information collected by the sensor according to one or more embodiments of the present disclosure. For example, FIG. 4 is a view for explaining a case where the electronic apparatus uses the three-phase motor and the driving power of the three-phase motor using the six switch elements.

Referring to FIG. 4, the driving device 140 may include a three-phase motor 141 and an inverter circuit 145. This configuration of the driving device assumes that the driving device operates the compressor in the refrigerator, and the driving device 140 may have a different configuration in case that the electronic apparatus 100 is a device other than the refrigerator or is intended to drive a component other than the compressor.

The three-phase motor 141 may receive the driving power through three lines. The three-phase motor 141 may thus be rotated by the driving power, and provide a corresponding rotational power to, for example, the compressor.

The inverter circuit 145 may include the six switch elements. In detail, two switch elements connected in series with each other may be included in one switching device, and three switching devices are disposed in parallel to one another. Accordingly, a first line (e.g., a first switching device) may generate a first driving power Va, a second line (e.g., a second switching device) may generate a second driving power Vb, and a third line (e.g., a third switching device) may generate a third the driving power Vc. The first to third driving powers may have alternating current waveforms having different phases by 120 degrees.

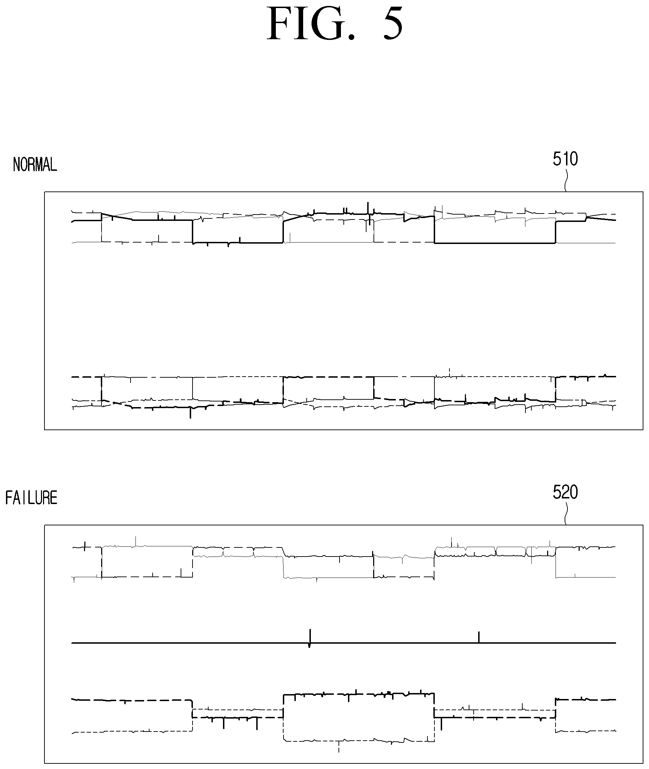

The sensor 110 may measure the current values at a plurality of positions in the inverter described above. For example, the sensor 110 may measure the current value corresponding to each of iₐₚ, i_{bp}, i_{cp}, iₐₘ, i_{bm}, and i_{cm}. In one or more examples, iₐₚ, i_{bp}, or i_{cp} may be a phase current flowing into the motor from a node a, b, or c, and iₐₘ, i_{bm}, or i_{cm} may be the current flowing from the motor to ground at the node a, b, or c. A form of each current value is described below with reference to FIG. 5.

FIG. 5 is a view for explaining examples of the normal state and the failure state according to examples of the collected the current information.

Referring to FIG. 5, among the current values of the sensor described above, the current values of a first group (e.g,, iₐₚ, i_{bp}, and i_{cp}) and the current values of a second group (e.g.,, iₐₘ, i_{bm}, and i_{cm}) may be symmetric to each other in the normal state as shown in FIG. 5. For example, in a normal waveform 510, an upper waveform is the current values of the first group, and a lower waveform is the current values of the second group.

However, in the failure state, it may be checked that some of the six values converge to a value of zero. In another failure state in addition to this case, there are cases where the current values have a similar waveform shape and only different sizes. Therefore, in the above-mentioned method, it is difficult to identify whether the state is the normal state or the error state, simply by whether the current waveforms of the two groups are symmetric to each other.

Therefore, in the present disclosure, according to one or more embodiments, the error may be classified using the neural network model.

The description below describes seventeen error types used in an environment as shown in FIG. 4.

In one or more examples, the first error may be a scale error in which the value (or RMS(root mean squrare) value) of the measured current to be greater than the applied current value by the predetermined value (e.g., 1.2 times) or more. The second error may be an offset error in which the peak value of the measured current is measured to be higher than the peak value in the normal state by a predetermined amount (for example, 0.25 A) or more. The first and second errors may be classified into the first error category.

In one or more examples, the third to eighth errors may be the abnormalities in which each of the six switch elements described above is not turned on. The third error may be the abnormality of the first switch element, the fourth error may be the abnormality of the second switch element, the fifth error may be the abnormality of the third switch element, the sixth error may be the abnormality of the fourth switch element, the seventh error may be the abnormality of the fifth switch element, and the eighth error may be the abnormality of the sixth switch element. The third to eighth errors may be classified into the second error category.

In one or more examples, the ninth to eleventh errors may be abnormalities in case that the disconnection occurs between the inverter and the motor. The ninth error is a case in which the disconnection occurs between the node a and the motor, the tenth error is a case in which the disconnection occurs between the node b and the motor, and the eleventh error is a case in which the disconnection occurs between the node c and the motor. The ninth to eleventh errors may be classified into the third error category.

The twelfth to seventeenth errors may be the abnormalities in which each of the six switch elements described above is not turned off. The twelfth error may be the abnormality of the first switch element, the thirteenth error may be the abnormality of the second switch element, the fourteenth error may be the abnormality of the third switch element, the fifteenth error may be the abnormality of the fourth switch element, and the sixteenth error may be the abnormality of the fifth switch element, and the seventeenth error may be an abnormality of the sixth switch element. The twelfth to seventeenth errors may be classified into the fourth error category.

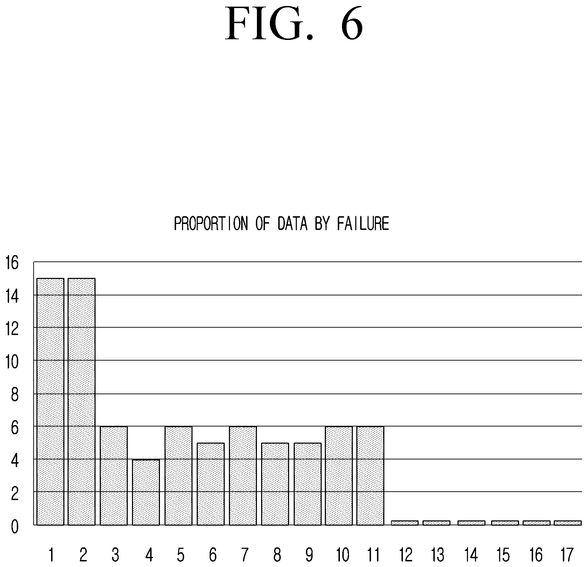

An error occurrence rate of each of the first to seventeenth errors is shown in FIG. 6.

The above-mentioned category classification assumes that one error type occurs in the same category. Therefore, if the plurality of errors are detected simultaneously in each of the second error category or the third error category, this case may be classified as a separate fifth error category (or sixth error category) rather than the second error category or the third error category described above. In one or more examples, if one error type from the second error category and one error type from the third error category are detected simultaneously, this case may also be treated the same.

FIG. 6 is a view showing the various error types according to the present disclosure.

Referring to FIG. 6, it may be seen that the error type corresponding to the first error category occupies a high frequency, and in particular, the error type corresponding to the fourth error category occupies a very low frequency.

In particular, it is difficult to collect data on the error type corresponding to the fourth error category, although this error category is the error type that may occur in an actual use environment.

As described above, the first error type occupies an excessively high frequency, and it is impossible to collect the fourth error category through actual data. Therefore, in the present disclosure, predetermined processing may be performed on the collected raw data. This configuration is described with reference to FIGS. 7 to 10.

FIG. 7 is a view for explaining an example of a method of processing the collected learning data according to the present disclosure.

The description describes examples of an under-sampling operation and an over-sampling operation for uneven data with reference to FIG. 7.

The under-sampling operation may be a method of equalizing a total number of data 711 and 722 by under-sampling a large number of acquired data 712 among collected data 710 to a small number of acquired data 711. In detail, the data may be evenly acquired by acquiring the average value of the data, and selecting a target number of only data similar to the average among the large number of acquired data without selecting the remaining data.

To the contrary, the over-sampling operation may be a method of equalizing a total number of data 741 and 742 by over-sampling a small number of acquired data 732 among collected data 730 to a large number of acquired data 731. In one or more exmaples, the small number of acquired data may be simply copied to enable the data to be the same as the large number of acquired data.

In the present disclosure, the under-sampling operation described above may be performed on the raw data to reduce the number of the error types corresponding to the first error category, thereby enabling a total number of errors corresponding to the first error category and a total number of errors corresponding to the second error category (or the third error category) to be approximately the same as each other. For example, the total number of error corresponding to the first error category and the total number errors corresponding to the second error category may be within 5% of each other, or within any other suitable threshold.

Alternatively, the error type corresponding to the first error category among the raw data may be under-sampled using median value (overall average number) information, and data corresponding to the second error category (or the third error category) among the raw data may be over-sampled.

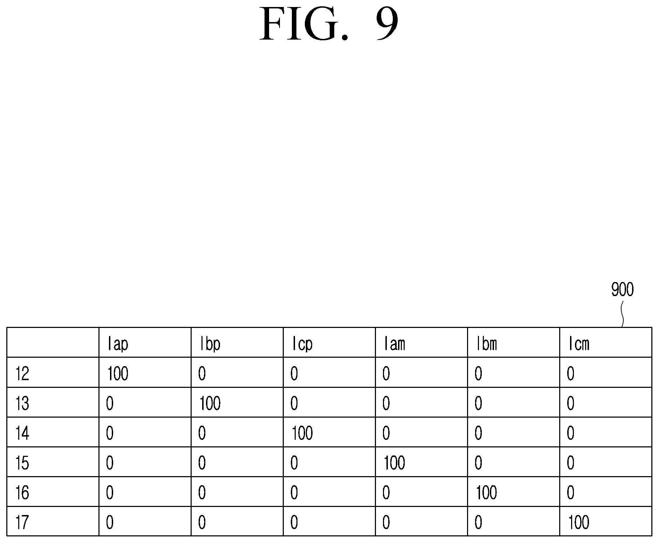

In one or more examples, the first learning data for the first neural network model may be provided by generating the learning data for the fourth error category as described below with reference to FIG. 9, and adding the same to a previously over-sampled (and/or under-sampled) result.

Hereinafter, the description describes a process of preparing the second learning data for the second neural network model while the first learning data for the first neural network model is prepared.

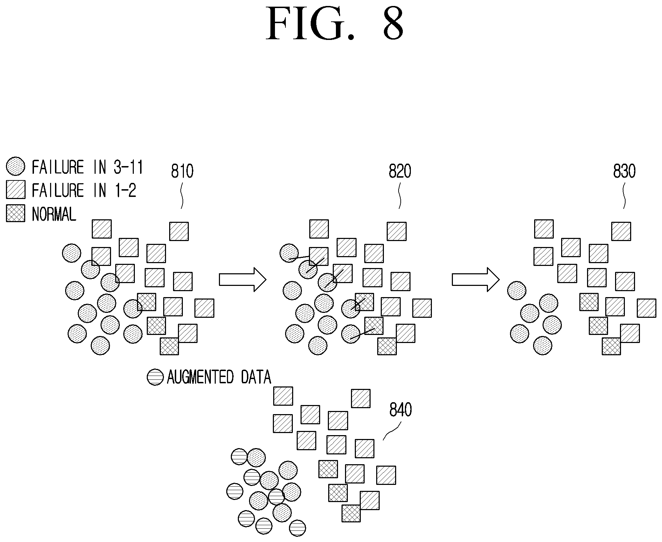

FIG. 8 is a view for explaining an example of the method of processing the collected learning data according to the present disclosure.

Referring to FIG. 8, data corresponding to the first error category and the data corresponding to the second error category (or the third error category) in the first neural network model may be adjacent to each other. Due to this adjacency, the error may be determined as the error corresponding to the first error category even though the error corresponds to the second error category.

Therefore, the first learning data may be processed in the following manner to better classify the first error category and the second error category (or the third error category) from each other.

First, in one or more examples, in case that first learning data 810 is provided in the same manner as shown in FIG. 7, the electronic apparatus may check data below a predetermined distance value by using an Euclidean distance value between the first error category and the second error category data (820), delete data within the checked predetermined distance from the first learning data (830).

In one or more examples, the electronic apparatus uses the Euclidean distance value, and in implementation, the electronic apparatus may use another distance value such as Manhattan and Minkowski distance. In one or more examples, in addition to the calculation method described above, the electronic apparatus may use various methods that may clarify the classification between categories.

In one or more examples, the electronic apparatus may check main components (axial direction or central coordinates) of the data corresponding to the first error category and the data corresponding to the second error category, and perform a process of deleting data disposed in the center.

In one or more examples, after deleting some data, the electronic apparatus may add augmented data 840 corresponding to the first error category because some data corresponding to the first error category is deleted. In one or more examples, augmented data may correspond to the original data that has been modified in one or more respects to increase the number of samples of data.

In one or more examples, the electronic apparatus 100 described above may perform the provision of the first and second learning data and the training of the neural network model, and the external device such as the manufacturer server may perform the same.

FIG. 9 is a view for explaining an example of the method of processing the collected learning data according to the present disclosure.

Referring to FIG. 9, the error in which some of the switch elements are continuously turned on may make it difficult to actually acquire data corresponding to the error. That is, the raw data may include no data corresponding to the fourth error category.

However, this error type is an error that causes an overload on the motor, and the corresponding error is thus necessarily required to be detected and classified.

In one or more examples, in the corresponding error type, a specific current value may have an extreme value. As shown in FIG. 9, data corresponding to the fourth error category may be generated by providing a data set in which one of the plurality of current values has the extreme value.

In one or more examples, a specific value may have the extreme value in the fourth error category as described above, and the overall average value of a feature may thus be affected by use of the data. Therefore, as described with reference to FIG. 7, only the minimum number may be used for the fourth error category without an operation of matching the number similar to that of another error type.

In one or more examples, the electronic apparatus 100 may perform a learning operation by using only one data for each type, then check whether the neural network model is normally operated, and gradually increase the number of data corresponding to the fourth error category to thus use only the minimum number in case that fourth error category classification is not successful.

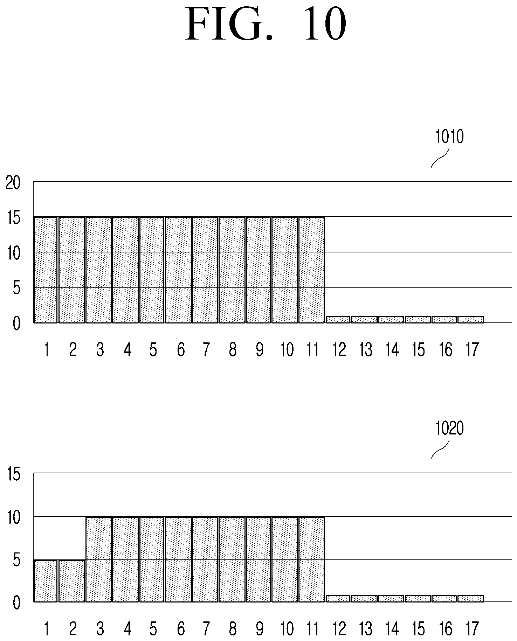

FIG. 10 is a view for explaining the learning data used for training each of two the neural network models according to the present disclosure.

FIG. 10 shows the number of error types in first learning data 1010 used for training the first neural network model, and the number of error types in second learning data 1020 used for training the second neural network model.

FIG. 6 shows that a proportion of data corresponding to the first error category occupies a larger proportion than the second error category (or the third error category). However, the electronic apparatus 100 may use the over-sampling or under-sampling described above to thus check that the number of errors corresponding to the first error category and the number of errors corresponding to the third error category in the first learning data 1010 are similar to each other.

The data corresponding to the fourth error category may have the extreme value, as described before. Therefore, the electronic apparatus 100 may check that the first learning data 1010 includes only the minimum number of errors corresponding to the fourth error category.

In the case of the second learning data 1020, as described above with reference to FIG. 8, the data corresponding to the first error category in the predetermined distance from the first learning data 1010 is deleted. Therefore, the electronic apparatus 100 may check that the number of error types corresponding to the first error category in the second learning data 1020 is less than the number of the error types corresponding to the first error category in the first learning data 1010.

Therefore, the data corresponding to the median value may be deleted from the second learning data 1020 to more accurately classify the first error category and the second error category from each other. Therefore, the electronic apparatus 100 may use the second learning data to thus train the neural network model capable of more accurately classifying whether the error corresponds to the first error category or the second error category (or the third error category).

In case that the first learning data 1010 is provided in this way, the electronic apparatus 100 may train the first neural network model by using the first learning data 1010, and train the second neural network model by using the second learning data 1020.

In one or more examples, hereinafter, the description describes a specific operation of performing the failure diagnosis by using the first neural network model and the second neural network model trained in the above-described manner.

FIG. 11 is a view for explaining a configuration example of the neural network model according to one or more embodiments of the present disclosure.

As shown in FIG. 11, in case of receiving the plurality of sensing values (e.g., sensing information) from the sensor 110, a preprocessing module 1110 may process (or work on) at least some of the received sensing values to thus acquire a data set to be input to the neural network model.

The description above describes that the information provided to the preprocessing module 1110 is input through the sensors. However, in one or more examples, some information may not be the information provided through the hardware sensor, but may be information stored in the memory 120 or predetermined data values.

The preprocessing module 1110 may combine the acquired sensing values (or measured values) of a predetermined period (e.g., 100 ms in case that a data collection cycle is 20 ms) to each other, determine which of the acquired sensing values to include in the data set, and acquire the data set by assigning the weight value to the sensing value. In one or more examples, the preprocessing module 1110 may perform operations of using the average value of the sensing values accumulated over a predetermined period of time, or assigning a specific weight value or a predetermined scaling value (for example, scaling up a value of 0.001 to 1) to the corresponding value. In one or more examples, the preprocessing module 1110 may encode or embed the data based on a purpose of the neural network model 1120 or 1130.

"The first neural network model 1120" or "the second neural network model 1130" shown in FIG. 11 may refer to an artificial intelligence model that includes the neural network trained to acquire information indicating the error type based on the current information. As shown in FIG. 11, in case of receiving the data set from the preprocessing module 1110, the first neural network model 1120 and the second neural network model 1130 may each output a probability value for each of the plurality of error types.

For example, each of the first neural network model 1120 and the second neural network model 1130 may be implemented as the CNN, the LSTM, the DNN, the RNN, the RBM, the DBN, the BRDNN, or the like. The two neural network models may have the same structure. That is, the two neural network models may have only the different learning data. Alternatively, the two neural network models may have different structures.

In one or more examples, "the type information" may be referred to as error type information, error probability information, probability information, or the like in case of being used as a general term for the information indicating the error type. In detail, the type information may be expressed as the probability value for each error type of the plurality of errors, and also include information on whether the error occurs and information on at least one error type.

The description above describes that the probability value of each error type is output as an output of the neural network model. However, in implementation, an additional configuration (e.g., softmax) may be added to the neural network model to thus output only an error type value having the highest probability value or a determination operation performed by a control module 1140 described below may be performed by the neural network model.

The control module 1140 may determine whether the error occurs and the corresponding error type in case that the error occurs by using first type information (e.g., the probability value for each of the plurality of error types) output by the first neural network model 1120 and second type information output by the second neural network model 1130.

In one or more examples, the control module 1140 may check the error type by using two reference values. In one or more examples, a first reference value (e.g., 0.7) is a reference value for determining, as the error, a case where a value is the first reference value or more, and a second reference value (e.g., 0.5) is a value less than the first reference value, and is a reference value for determining, as no error (e.g., a category indicating that no error has occurred), a case where a value is the second reference value or less. In one or more examples, the above-mentioned values are only examples, it is also possible to use other values other than the above-mentioned values, use only one reference value instead of two reference values, or use three or more reference values.

Therefore, the control module 1140 may first check no error occurrence (e.g., a category where no error has occurred) in case that all the probability values in the first type information are less than the second reference value.

In one or more examples, the control module 1140 may determine that an error of an error type greater than the first reference value occurs in case that at least one probability value among the probability values in the first type information is more than the first reference value. In one or more examples, the control module 1140 may further perform accurate error classification based on the probability value in the second type information in case that a probability value of an error type corresponding to an error category different from the corresponding error type is more than the second reference value.

For example, the first error type corresponding to the first error category in the first type information may have the probability value of 0.7 or more, and a third error type corresponding to the second error category may have probability value within a range of 0.7 to 0.5. In this case, the control module 1140 may check the error type based on the probability value in the second type information to perform the accurate classification.

In one or more examples, the control module 1140 may determine an error type having a third reference value or more as the error in case that the error type has a value more than the predetermined third reference value among the error values in the second type information. Alternatively, the control module 1140 may also check the largest error value in the second type information, and determine the error type corresponding to the largest error value as the error.

For example, the control module 1140 may use the second neural network model to thus check the error type based on the probability value of the second neural network model in case that the error type corresponding to the error category different from the error category to which the error type greater than the first reference value corresponds has a probability value within a range of the first to second reference values, or there is no error type greater than the first reference value overall and the probability value within the range of the first to second reference values is checked.

For example, the control module 1140 may determine that an error of an error type greater than the third reference value occurs in case that the error type corresponding to the second neural network model has a probability value of the third reference value or more. In one or more examples, the third reference value may be the same as the first reference value (e.g., 0.7) described above. However, in implementation, the control module 1140 may use another reference value.

If the first neural network model has the probability value of the first reference value or more for the first error category, and the probability value within the first to third reference values for the second error category, the control module 1140 may first determine that the error occurs in the electronic apparatus, and check, as a currently occurring error type, the error type having the highest probability value among the probability values output by the second neural network model.

Therefore, to summarize the above, first, the control module 1140 may use a method of checking the error type by entirely using each probability value of the first neural network model and each probability value of the second neural network model. Secondly, the control module 1140 may also use the first neural network model to thus check only whether the error occurs in the electronic apparatus, and use the second neural network model to thus perform an operation of identifying the error in case of determining that the error occurs. Thirdly, the control module 1140 may also use a method of further using the second neural network model to thus accurately classify the two error categories only in case that the error type corresponds to an error type that is difficult to be classified (for example, the error type corresponding to the first and second error category) while using the first neural network model to check the error type.

In case that the error type (or error category) is checked, the control module 1140 may perform the control operation corresponding to the error category. The control operation for each error category is described above with reference to FIG. 2, and its redundant description is thus omitted.

The description above describes the method of using the current information by inputting the same simultaneously (or together) into the first neural network model and the second neural network model. However, in implementation, it is also possible to sequentially use the first neural network model and the second neural network model. This case is described below with reference to FIG. 12.

FIG. 12 is a view for explaining a configuration example of the neural network model according to one or more embodiments of the present disclosure.

As shown in FIG. 12, in case of receiving the plurality of sensing values (e.g., the sensing information) from the sensor 110, a preprocessing module 1210 may process (or work on) at least some of the received sensing values to thus acquire a data set to be input to the neural network model.

"The first neural network model 1220" may refer to an artificial intelligence model that includes the neural network trained to acquire the information indicating the error type based on the current information. The first neural network model 1220 may receive the current information and output the first type information.

A control module 1240 may primarily determine whether the error occurs and the corresponding error type based on first error type information output by the first neural network model 1220 in case that the error occurs. For example, the control module 1240 may check whether at least one probability value among the plurality of probability values is the second reference value or more.

If at least one probability value is the first reference value or more, the control module 1240 may determine that the error is in an error category corresponding to an error type having the probability value of the first reference value or more.

If none of the total probability values is the first reference value or more, the control module 1240 may allow a second neural network model 1230 to output the second type information to further perform the failure diagnosis by using the second neural network model.

Accordingly, in case of further acquiring the second type information, the control module 1240 may check whether the error or failure occurs by checking each probability value in the acquired second type information. For example, in case that at least one probability value among the plurality of probability values is the third reference value or more, the control module 1240 may determine that the error is in an error category corresponding to an error type having the probability value of the third reference value or more.

In one or more examples, the third reference value may be the same or different from the first reference value described above. In one or more examples, the control module 1240 may use the second neural network model without using the reference value. That is, in case of checking that the error occurs using the first neural network model, the control module 1240 may determine occurrence of a failure of the error type having the highest probability value among the probability values output by the second neural network model.

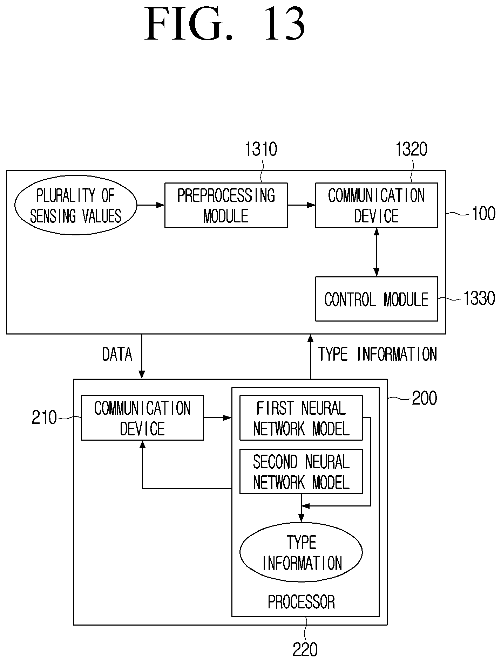

FIG. 13 is a view for explaining a configuration example of the neural network model according to one or more embodiments of the present disclosure.

In detail, FIG. 13 is a view for explaining one or more embodiments of using the neural network model disposed in the external server.

Referring to FIG. 13, in case of receiving the current information from the sensor, the preprocessing module 1310 may process (or work on) at least some of all data included in the current information to thus acquire the data set to be input to the neural network model.

The data set may be transmitted to an external device 200 through a communication device 1320.

The external device 200 may receive the data set through a communication device 210. A processor 220 of the external device 200 may generate the type information by using the pre-trained first and second neural network models, and control the communication device 210 to transmit the generated type information to the electronic apparatus 100. In one or more examples, the processor 220 may not transmit the type information as is, but identify whether the error occurs or identify the error category that occurs based on the type information, and transmit the identified result to the electronic apparatus 100 through the communication device 210.

In case of receiving the type information through the communication device 1320, a control module 1330 may check whether the error occurs and/or check the error type (or error category) based on the received type information.

In one or more examples, the control module 1330 may control the electronic apparatus 100 to be operated in a control mode corresponding to the checked error type (or error category).

With reference to FIG. 13, the description is provided assuming that the neural network model described in FIG. 11 is disposed in the external device. However, in implementation, the neural network model in the embodiment described with reference to FIG. 12 may also be disposed in the external server.

The description above describes the case of using two neural network models. However, based on an error category type, the electronic apparatus 100 may be implemented to use three or more neural networks, and may also be implemented to perform the above-described operation by using one neural network model. For example, the electronic apparatus 100 may be implemented to allow one neural network model to individually learn the first learning model and the second learning model described above for one neural network model to perform the operations performed by the two neural network models described above with reference to FIG. 11.

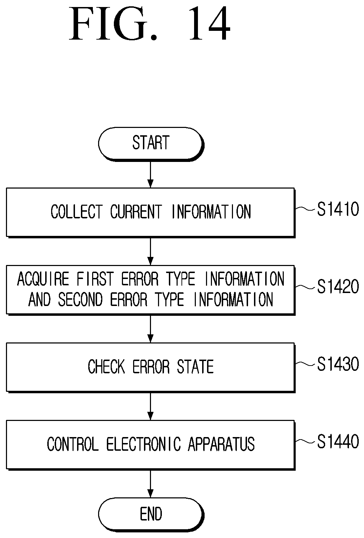

FIG. 14 is a view for explaining a controlling method according to one or more embodiments of the present disclosure.

Referring to FIG. 14, the electronic apparatus (or the processor) may detect the current information therein at operation S1410.

In one or more examples, the electronic apparatus may acquire the first error type information and second error type information by inputting the current information into each of the first neural network model and the second neural network model, pre-trained to classify the error type of the electronic apparatus at operation S1420.

In one or more examples, the first neural network model or the second neural network model may be a model that outputs the probability value corresponding to each of the plurality of error types at operation S1430. In one or more examples, the first neural network model may be the pre-trained model using the first learning data for the plurality of error types, and the second neural network model may be the pre-trained model using the second learning data processed from the learning data to classify the plurality of error types to which each error category corresponding. The learning process and feature of each neural network model are described above, and their redundant descriptions are thus omitted.

In one or more examples, the electronic apparatus may check the error category of the electronic apparatus based on the acquired first error type information and the second error type information. For example, the electronic apparatus may check the error category by first using the acquired first error type information, and then check the error category by further checking the second error type information. Alternatively, the electronic apparatus may check the error category after acquiring both the first error type information and the second error type information.

In case of being operated in the first case, the electronic apparatus may check its error category by using the probability value of each of the plurality of error types included in the second error type information if the probability value of each of the plurality of error types included in the first error type information is less than the first reference value corresponding to an error determination reference, and at least one probability value included in the first error type information is more than the second reference value which is less than the first reference value.

In case of being operated in the second case, the electronic apparatus may check the error category corresponding to the error type of the first reference value or more as its error category if at least one probability value among the plurality of probability values in the first error type information is the first reference value, which becomes the error determination reference, or more.

In one or more examples, the electronic apparatus may check no error occurrence therein in case that the plurality of probability values in the first error type information is less than the second reference value which is less than the first reference value.

In one or more examples, the electronic apparatus may check the error category corresponding to the error type of the third reference value or more as its error category in case that at least one probability value among the plurality of probability values in the first error type information has a value between the first reference value and the second reference value, and at least one probability value among the plurality of probability values in the second error type information is the third reference value, which becomes the error determination reference, or more.

In one or more examples, the electronic apparatus may control its operation based on the checked error category at operation S1440. For example, the electronic apparatus may control its operation to be operated in the first mode of limiting the performance of the driving device corresponding to the current information in case that the checked error category is the first error category, control its operation to be operated in the second mode of further limiting the performance of the driving device than the first mode in case that the checked error category is the second error category, and control its operation for the driving device not to be operated in case that the checked error category is the third error category.

The electronic apparatus may display information on the checked category in case of checking the error category in this way. In one or more examples, the electronic apparatus may perform the control operation based on the user choice in case that the error category is checked as the first error category or the second error category.

In one or more examples, the electronic apparatus may display information indicating that the control command is incapable of being performed in case of receiving the control command for the component related to the error while operated in the first mode or the third mode as described above, and the checked error category is the first error category and the control command is a command corresponding to the performance of the driving device.

As described above, the controlling method according to this embodiment may use two neural network models, especially the second neural network model which classifies the error categories more clearly, and may thus classify the errors occurring in the electronic apparatus more accurately. In one or more examples, the method may perform the accurate error classification, and also perform the control operation corresponding to the classified error.

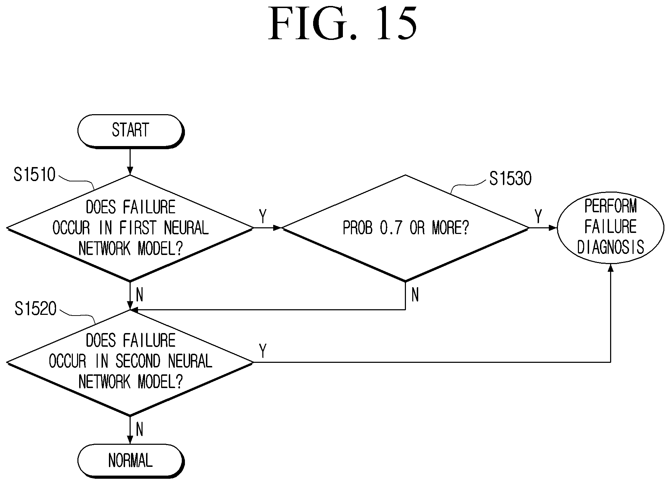

FIG. 15 is a flowchart for explaining an error diagnosis method using a plurality of the neural network models according to one or more embodiments of the present disclosure. In detail, FIG. 15 is a flow chart for explaining an example of the error diagnosis method in case of sequentially using the plurality of neural network models.

Referring to FIG. 15, the electronic apparatus may acquire the first error type information by inputting the plurality of current information into the first neural network model. The electronic apparatus may check whether the error or failure occurs by checking each probability value in the acquired error type information. For example, the electronic apparatus may check whether at least one probability value among the plurality of probability values is the second reference value or more ("Y" at operation S1510).

If at least one probability value is the first reference value or more, the electronic apparatus may determine that the error is in the error category corresponding to the error type having the probability value of the first reference value or more at operation S1530.

If none of the total probability values is the first reference value or more, the electronic apparatus may further perform the failure diagnosis using the second neural network model ("N" at operation S1530). For example, the electronic apparatus may acquire the second error type information by inputting the plurality of current information into the second neural network model, and check whether the error or failure occurs using each probability value in the acquired error type information.

In one or more examples, in case that at least one probability value among the plurality of probability values is the third reference value or more, the electronic apparatus may determine that the error is in the error category corresponding to the error type having the probability value of the third reference value or more ("Y" at operation S1520).

In one or more examples, the third reference value may be the same or different from the first reference value described above. In one or more examples, the electronic apparatus may use the second neural network model without using the reference value. That is, in case of checking that the error occurs using the first neural network model, the electronic apparatus may determine the occurrence of the failure of the error type having the highest probability value among the probability values output by the second neural network model.

Meanwhile, the illustrated example describes that the electronic apparatus performs the failure diagnosis using the second neural network model even in case that the failure is not diagnosed based on the first error type information of the first neural network model. However, in implementation, the electronic apparatus may determine that no failure occurs and may not use the second neural network model in case that all the probability values in the first error type information are the second reference value or less.

In one or more examples, the electronic apparatus may determine the error type having the corresponding first reference value in case that at least one probability value in the first error type information is the first reference value or more. However, the electronic apparatus may further re-check the error type using the second neural network model in case that the error type corresponds to the first error category or the second error category that requires the accurate classification.

In one or more examples, the illustrated example describes that the electronic apparatus sequentially uses two neural network models. However, for its faster execution, the electronic apparatus may acquire both the first error type information and the second error type information by inputting the current information into two neural network models, and then perform only the above-described determination operation based on FIG. 15.

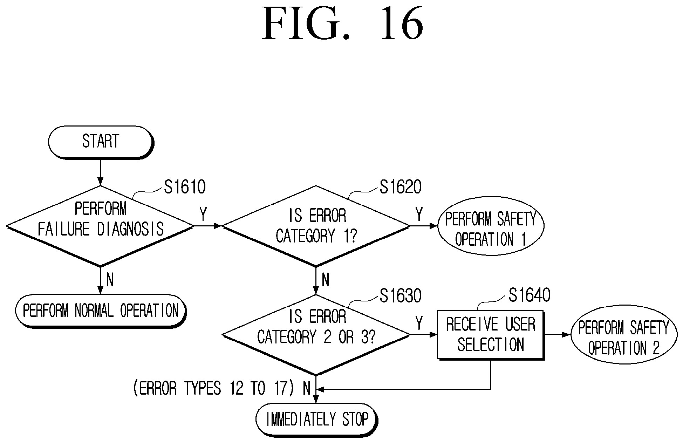

FIG. 16 is a view for explaining a different control operation for each error category according to one or more embodiments of the present disclosure.

Referring to FIG. 16, the electronic apparatus may check whether the failure occurs at operation S1610. This step may be performed like the operation of FIG. 15 described above.

The electronic apparatus may check whether the occurring error category is the first error category at operation S1620 in case that the failure occurrence is checked ("Y" at operation S1610). The electronic apparatus may be operated in the first mode in case that the occurring error category is the first error category ("Y" at operation S1620).

In one or more examples, the electronic apparatus may check whether the occurring error category is the second error category at operation S1630. The electronic apparatus may receive an operation method selected from the user at operation S1640 in case that the occurring error category is the second error category ("Y" at operation S1630). The electronic apparatus may be operated in the second mode based on the user choice, or stop the operation for driving the component in which the error occurs.

The illustrated example describes that the electronic apparatus maintain the second mode or driving operation based on the user choice. However, in implementation, the electronic apparatus may first be operated in the second mode, and the electronic apparatus may be switched to maintaining the second mode or stopping the driving operation based on the user's subsequent setting.

The electronic apparatus may ensure for performance of the function corresponding to the error to be maintained in case that the error category is an error category other than the first to third error categories (that is, in case that the occurring error category is the fourth error category).

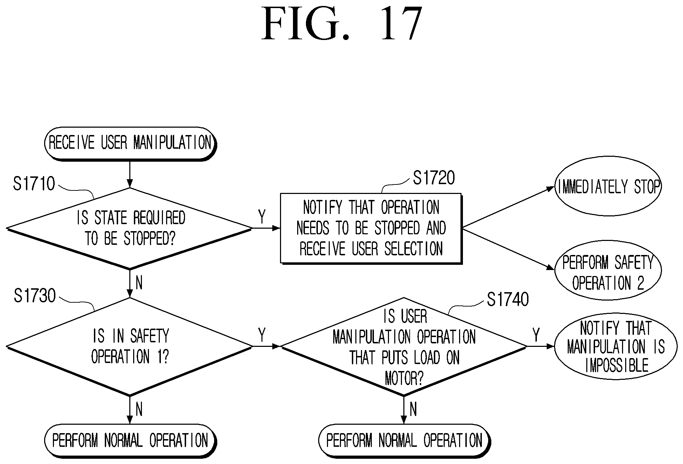

FIG. 17 is a view for explaining the user control command and the control operation for each error category according to one or more embodiments of the present disclosure.

Referring to FIG. 17, the electronic apparatus may receive the user control command. This user control command may be a menu selection command for controlling the function of the electronic apparatus or a control command for changing a setting of the specific function.

The electronic apparatus may check whether its current operation state (or operation mode) is stopped in case of receiving the control command from the user at operation S1710. That is, as described above, the electronic apparatus may check whether the error corresponding to the second error category or the third error category occurs.

In case that its operation is in a stop state ("Y" at operation S1710), the electronic apparatus may display to the user that the operation of the specific function is currently stopped. In one or more examples, described above, in the case of the third error category, the electronic apparatus may notify that the electronic apparatus is incapable of being operated, and in the case of the second error category, the electronic apparatus may not perform its operation, or display a menu asking the user to select whether to operate the electronic apparatus in the second mode at operation S1720.

If its operation is in the stop state ("N" at operation S1710), the electronic apparatus may check whether the electronic apparatus is being operated in safety operation 1 at operation S1730. That is, as described above, the electronic apparatus may check whether the electronic apparatus is being operated in the first mode or whether the occurring error corresponds to the first error category, and check whether the user control command is an operation that puts the load on the motor at operation S1740.

For example, the electronic apparatus may determine that an operation of increasing a temperature of the refrigerator is not an operation that puts the load, and determine an operation of lowering the temperature of the refrigerator or a control command to increase a rotation speed of the motor compared to its current speed as an operation that puts the load.

The electronic apparatus may perform an operation based on a user request if the user control command does not affect the load.

The electronic apparatus may notify that the electronic apparatus is incapable of performing the user request if the user control command affects the load ("Y" at operation S1740).

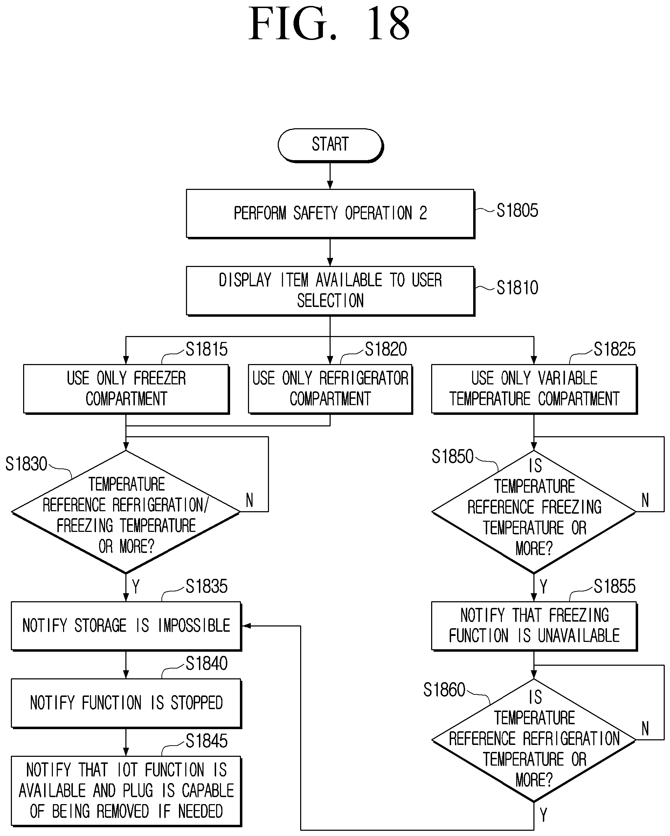

FIG. 18 is a view for explaining an operation example in case that the electronic apparatus is the refrigerator according to one or more embodiments of the present disclosure.

Hereinafter, the description is provided assuming that the electronic apparatus receives the user control command while operated in the second mode. However, the following operations may be similarly applied while the electronic apparatus is operated in the first mode.

First, while operated in the second mode at operation S1805, the electronic apparatus 100 may only display currently available items in case that the user selects a menu, turns on the touch screen to input the control command, or manipulates the input device at operation S1810. For example, the electronic apparatus may only display a menu item for a component capable of being operated in case that the electronic apparatus is the refrigerator operated by one compressor, and may only partially maintain a temperature only in the refrigerator compartment, partially maintain a temperature only in the freezer compartment, or may maintain a temperature only in the variable temperature compartment.

The electronic apparatus may display an item capable of being manipulated in relation to the freezer compartment manipulation if the electronic apparatus is capable of using only the freezer compartment (or only the refrigerator compartment) at operation S1815 or operation S1820, and display that the operation is incapable of being performed at operation S1835 if a temperature set by the user is a temperature that current adds the load to the motor at operation S1830. In one or more examples, if necessary, the electronic apparatus may display a notice that an operation of the corresponding component is to be stopped at operation S1840, provide a corresponding notification to the user terminal device, or provide a notification of requesting the user to control a plug because its operation is in a dangerous situation at operation S1845.

If only the variable temperature compartment is capable of being used at operation S1825, the electronic apparatus may display only the item that the user may manipulate in relation to the variable temperature compartment manipulation and identify whether the user's set operation is capable of being performed at operation S1850. That is, the electronic apparatus may identify whether the user manipulation command is a setting that puts an additional load on the current motor at operation S1850 or operation S1860, and display information on an unavailable function (or device type) at operation S1855 or operation 1835. For example, if the variable temperature compartment may be used by being changed to the refrigerator compartment or the freezer compartment, the electronic apparatus may check whether the electronic apparatus is capable of being operated as the freezer compartment or the refrigerator compartment in its current state, and the electronic apparatus may notify that the electronic apparatus is capable of being used only as the refrigerator compartment in case that the electronic apparatus is capable of being used only as the refrigerator compartment.

The electronic apparatus may display a message indicating a state where the item is incapable of being stored in the refrigerator in case that the electronic apparatus is incapable of being used even as the refrigerator compartment having the temperature set by the user.

In performing this operation, the refrigerator may be operated by minimizing the rotation speed of the motor to perform only the minimum temperature maintenance operation, and guide a failure measure operation to the user to enable a quick after-sales service. In one or more examples, the refrigerator may perform an additional operation such as turning off lights or disabling a defrost function to avoid causing unnecessary power increase in this state.

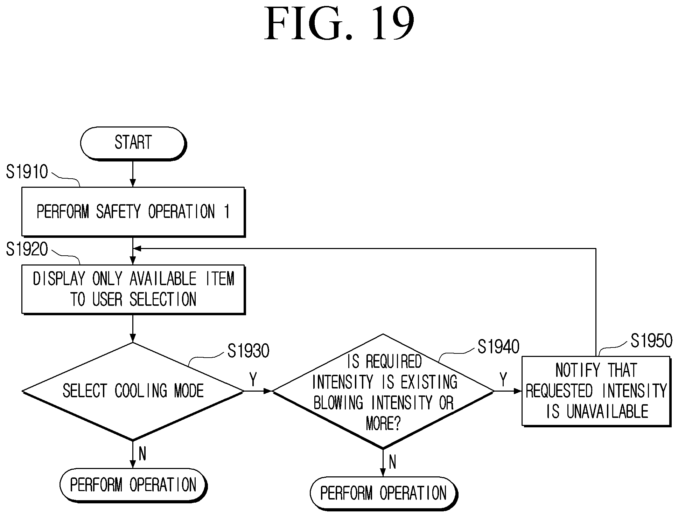

FIG. 19 is a view for explaining an operation example in case that the electronic apparatus is the air conditioner according to one or more embodiments of the present disclosure.

First, assume a case where an error corresponding to the first error category occurs in the air conditioner and the air conditioner is being operated in the first mode at operation S1910.

At operation S1920, the electronic apparatus 100 may display only the currently available item in case that the user selects the menu, turns on the touch screen to input the control command, or manipulates the input device while the electronic apparatus is operated in the first mode as described above. For example, the air conditioner may have a powerful cooling mode, a cooling mode, a blowing mode, an air purifying mode, or the like. For example, the air conditioner may display that all the remaining modes are selectable except for the powerful cooling mode that puts a load on the motor.

In one or more examples, in case that the user selects the cooling mode ("Y" at operation S1930), the electronic apparatus may check the user set temperature or a blowing intensity to thus check whether the set temperature or blowing intensity input by the user causes an additional load on the motor at operation S1940. In one or more examples, the electronic apparatus may perform the user control command if the temperature or intensity is within a range that adds no load. Otherwise, the electronic apparatus may display that the corresponding function is incapable of being performed at operation S1950.

If the user selects the blowing mode or the air purifying mode other than the cooling mode, the electronic apparatus may execute the user command as is.

The description above assumes that the error corresponding to the first error category occurs. However, in case that the error corresponding to the second error category occurs, the electronic apparatus may also be operated similarly to the case described above. That is, the electronic apparatus may display the item that the user may select by limiting the mode to the blowing mode and air purifying mode excluding a cooling operation, and perform the control for the electronic apparatus to be operated only within the corresponding operations.

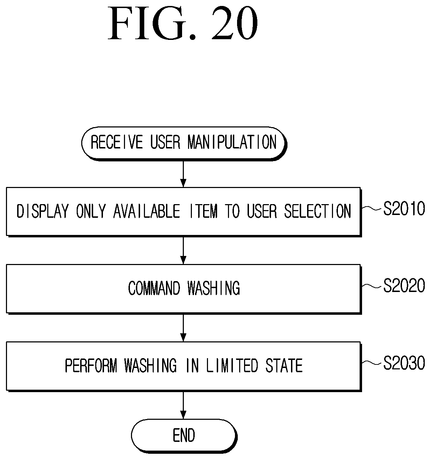

FIG. 20 is a view for explaining an operation example in case that the electronic apparatus is the washing machine according to one or more embodiments of the present disclosure.

First, the washing machine may check its error, and display that the washing machine is incapable of performing its operation in case that the occurring error corresponds to the third error category. If the occurring error corresponds to the second error category, the electronic apparatus may allow the user to select only the remaining items excluding operations such as high-speed washing and spin-drying, which puts a large load on the motor. If the occurring error corresponds to the first error category, the electronic apparatus may only display an item by assuming that the electronic apparatus is incapable of performing the spin-drying at the highest speed or the washing of a predetermined weight or above.

In case of receiving a user washing command on these limited displayed items at operation S2010 and S2020, the electronic apparatus may perform an operation based on the received washing command at operation S2030. In one or more examples, the electronic apparatus may perform control for the motor to be operated within a range where the rotation speed of the motor does not use the maximum speed in the first error category as described above, and perform control for the washing to be performed only at a lower speed than the above-mentioned maximum speed, in the second error category.

Meanwhile, the methods according to at least some of the various embodiments of the present disclosure described above may be implemented in the form of an application which may be installed on a conventional electronic apparatus.

In one or more examples, the methods according to at least some of the various embodiments of the present disclosure described above may be implemented only by software upgrade or hardware upgrade of the conventional electronic apparatus.

In one or more examples, the methods according to at least some of the various embodiments of the present disclosure described above may be performed through an embedded server disposed in the electronic apparatus, or at least one external server of the electronic apparatus.

According to one or more embodiments of the present disclosure, the various embodiments described above may be implemented in software including an instruction stored in a machine-readable storage medium (for example, a computer-readable storage medium). A machine may be an apparatus that invokes the stored instruction from the storage medium, may be operated based on the invoked instruction, and may include the electronic apparatus (e.g., electronic apparatus A) according to the disclosed embodiments. In case that the instruction is executed by the processor, the processor may perform a function corresponding to the instruction directly or by using another component under control of the processor. The instruction may include a code provided or executed by a compiler or an interpreter. The machine-readable storage medium may be provided in the form of a non-transitory storage medium. In one or more examples, the "non-transitory storage medium" may refer to a tangible device and only indicate that this storage medium does not include a signal (e.g., electromagnetic wave), and this term does not distinguish a case where data is stored semi-permanently in the storage medium and a case where data is temporarily stored in the storage medium from each other. For example, the "non-transitory storage medium" may include a buffer in which data is temporarily stored. According to one or more embodiments, the methods according to the various embodiments disclosed in the present disclosure may be included and provided in a computer program product. The computer program product may be traded as a product between a seller and a purchaser. The computer program product may be distributed in a form of the machine-readable storage medium (for example, a compact disc read only memory (CD-ROM)), or may be distributed online (e.g., downloaded or uploaded) through an application store (e.g., PlayStore^{™}) or directly between two user devices (e.g., smartphones). In case of the online distribution, at least a part of the computer program product (e.g., downloadable app) may be at least temporarily stored or temporarily provided in the machine-readable storage medium such as a server memory of a manufacturer, a server memory of an application store, or a relay server memory.

The various embodiments of the present disclosure may be implemented by software including an instruction stored in the machine-readable storage medium (for example, the computer-readable storage medium). A machine may be an apparatus that invokes the stored instruction from the storage medium, may be operated based on the invoked instruction, and may include the electronic apparatus (e.g., electronic apparatus 100) according to the disclosed embodiments.

In case that the instruction is executed by the processor, the processor may directly perform a function corresponding to the instruction or other components may perform the function corresponding to the instruction under a control of the processor. The instruction may include a code provided or executed by a compiler or an interpreter.

Although the embodiments of the present disclosure are shown and described as above, the present disclosure is not limited to the above-mentioned specific embodiments, and may be variously modified by those skilled in the art to which the present disclosure pertains without departing from the gist of the present disclosure as claimed in the accompanying claims. These modifications should also be understood to fall within the scope and spirit of the present disclosure.

## Claims

1. An electronic apparatus comprising:
a sensor configured to detect information indicating a status of the electronic apparatus;
a memory storing (i) a first neural network model and a second neural network model, pre-trained to classify an error type of the electronic apparatus, and (ii) one or more instructions; and
a processor operatively coupled to the memory and configured to execute the one or more instructions stored in the memory,
wherein the one or more instructions, when executed by the processor, cause the electronic apparatus to:
acquire first error type information and second error type information by inputting the information indicating the status of the electronic apparatus into each of the first neural network model and the second neural network model,
check an error category of the electronic apparatus based on the first error type information and second error type information, and
control an operation of the electronic apparatus based on the error category,
wherein the first neural network model is pre-trained using first learning data for a plurality of error types, and
the second neural network model is pre-trained using second learning data processed from the first learning data to classify error categories to which the plurality of error types respectively correspond.

2. The electronic apparatus as claimed in claim 1, wherein the first neural network model or the second neural network model is a model that outputs a probability value corresponding to each of the plurality of error types, and
wherein the one or more instructions, when executed by the processor, cause the electronic apparatus to: check the error category of the electronic apparatus by using the probability value of each of the plurality of error types included in the second error type information based on determining that the probability value of each of the plurality of error types included in the first error type information is less than a first reference value corresponding to an error determination reference, and at least one probability value included in the first error type information is more than a second reference value which is less than the first reference value.

3. The electronic apparatus as claimed in claim 1, wherein the first neural network model or the second neural network model is a model that outputs a probability value corresponding to each of the plurality of error types, and
wherein the one or more instructions, when executed by the processor, cause the electronic apparatus to:
check an error category corresponding to an error type having a value that is a first reference value or greater as the error category of the electronic apparatus in case that at least one probability value among the probability values in the first error type information is the first reference value or greater, ,
check no error occurrence of an error in the electronic apparatus in case that the probability values in the first error type information is less than or equal to a second reference value which is less than the first reference value, and
check an error category corresponding to an error type having a value that is a third reference value or greater as the error category of the electronic apparatus in case that the at least one probability value among the probability values in the first error type information has a value between the first reference value and the second reference value, and at least one probability value among the probability values in the second error type information is the third reference value or greater.

4. The electronic apparatus as claimed in claim 1, wherein the one or more instructions, when executed by the processor, cause the electronic apparatus to:
check, based on the first error type information and the second error type information, one error category among a plurality of error categories comprising no occurrence of an error, a first error category, a second error category, and a third error category,
control the operation of the electronic apparatus for the electronic apparatus to be operated in a first mode of limiting a performance of a driving device corresponding to the information indicating the status of the electronic apparatus in case that the checked error category is the first error category,
control the operation of the electronic apparatus for the electronic apparatus to be operated in a second mode of further limiting the performance of the driving device than the first mode in case that the checked error category is the second error category, and
control the operation of the electronic apparatus for the driving device not to be operated in case that the checked error category is the third error category.

5. The electronic apparatus as claimed in claim 4, further comprising a display,
wherein the one or more instructions, when executed by the processor, cause the electronic apparatus to control the display to display information on the checked error category.

6. The electronic apparatus as claimed in claim 5, further comprising an input device receiving a control command,
wherein the one or more instructions, when executed by the processor, cause the electronic apparatus to control the display to display information indicating that the control command is incapable of being performed in case that the checked error category is the first error category and the control command is a command corresponding to the performance of the driving device.

7. The electronic apparatus as claimed in claim 1, further comprising a driving device comprising a motor and an inverter configured to provide driving power to the motor,
wherein the sensor is configured to detect a plurality of current values in the driving device, and
wherein the one or more instructions, when executed by the processor, cause the electronic apparatus to check the error category for at least one of the motor and the inverter based on the first error type information and the second error type information.

8. The electronic apparatus as claimed in claim 1, wherein the first learning data is data sampled to have a number of data for each error type among collected data, and
the second learning data is learning data acquired by deleting (i) data within a predetermined range of a second error type corresponding to a second error category among the first learning data of a first error type corresponding to a first error category and (ii) data within a predetermined range of the first error type among the second learning data of the second error type.

9. The electronic apparatus as claimed in claim 8, wherein the second learning data comprises augmented data corresponding to one of the first error type and the second error type such that the learning data corresponding to the first error category and the learning data corresponding to the second error category to have a degree of similarity within a predetermined threshold.

10. The electronic apparatus as claimed in claim 8, wherein the data corresponding to the first error category and the second error category in the first learning data are data based on the information indicating the status of the electronic apparatus, and
wherein the first learning data further comprises experimental data by the plurality of error types in a third error category.

11. A method for controlling an electronic apparatus, the method comprising:
detecting information indicating a status of the electronic apparatus;
acquiring first error type information and second error type information by inputting the information indicating the status of the electronic apparatus into each of a first neural network model and a second neural network model, pre-trained to classify an error type of the electronic apparatus;
checking an error category of the electronic apparatus based on the first error type information and second error type information; and
controlling an operation of the electronic apparatus based on the error category,
wherein the first neural network model is pre-trained using first learning data for a plurality of error types, and
wherein the second neural network model is pre-trained using second learning data processed from the first learning data to classify the error categories to which the plurality of error types respectively correspond.

12. The method as claimed in claim 11, wherein the first neural network model or the second neural network model is a model that outputs a probability value corresponding to each of the plurality of error types, and
in the checking of the error category, the error category of the electronic apparatus is checked by using the probability value of each of the plurality of error types included in the second error type information based on determining that the probability value of each of the plurality of error types included in the first error type information is less than a first reference value corresponding to an error determination reference, and at least one probability value included in the first error type information is more than a second reference value which is less than the first reference value.

13. The method as claimed in claim 11, wherein the first neural network model or the second neural network model is a model that outputs a probability value corresponding to each of the plurality of error types, and
wherein the checking of the error category further comprises:
checking an error category corresponding to an error type having a value that is a first reference value or greater as the error category of the electronic apparatus in case that at least one probability value among the probability values in the first error type information is the first reference value or greater,
checking no error occurrence of an error in the electronic apparatus in case that probability values in the first error type information is less than or equal to a second reference value which is less than the first reference value, and
checking an error category corresponding to an error type having a value that is a third reference value or greater as the error category of the electronic apparatus in case that the at least one probability value among the probability values in the first error type information has a value between the first reference value and the second reference value, and at least one probability value among the probability values in the second error type information is the third reference value or greater.

14. The method as claimed in claim 11, wherein the checking of the error category further comprises:
checking, based on the acquired first error type information and second error type information, one error category among a plurality of error categories comprising no occurrence of an error, a first error category, a second error category, and a third error category , and
wherein the controlling further comprises:
controlling the operation of the electronic apparatus to be operated in a first mode of limiting a performance of a driving device corresponding to the information indicating the status of the electronic apparatus in case that the checked error category is the first error category,
controlling the operation of the electronic apparatus to be operated in a second mode of further limiting the performance of the driving device than the first mode in case that the checked error category is the second error category, and
controlling the operation of the electronic apparatus not to be operated in case that the checked error category is the third error category.

15. A non-transitory computer-readable recording medium storing a program for executing a method for controlling an electronic apparatus, wherein the method comprises:
receiving information indicating a status of the electronic apparatus,
acquiring first error type information and second error type information by inputting the information indicating the status of the electronic apparatus into each of a first neural network model and a second neural network model, pre-trained to classify an error type of the electronic apparatus,
checking an error category of the electronic apparatus based on the first error type information and second error type information, and
controlling an operation of the electronic apparatus based on the error category,
wherein the first neural network model is pre-trained using first learning data for a plurality of error types, and
wherein the second neural network model is pre-trained using second learning data processed from the first learning data to classify error categories to which the plurality of error types respectively correspond.
